(19) **Europäisches Patentamt**
**European Patent Office**
**Office européen des brevets**

(11) **EP 4 206 264 A1**

(12) # EUROPEAN PATENT APPLICATION
published in accordance with Art. 153(4) EPC

(43) Date of publication:
**05.07.2023 Bulletin 2023/27**

(21) Application number: **21861750.4**

(22) Date of filing: **30.08.2021**

(51) International Patent Classification (IPC):
**C08J 5/24** (2006.01)   **C08G 18/58** (2006.01)
**C08G 59/24** (2006.01)   **C08G 59/42** (2006.01)

(52) Cooperative Patent Classification (CPC):
**C08G 18/58; C08G 59/24; C08G 59/42; C08J 5/24**

(86) International application number:
**PCT/JP2021/031686**

(87) International publication number:
**WO 2022/045329 (03.03.2022 Gazette 2022/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.08.2020   JP 2020145379**

(71) Applicant: **Toray Industries, Inc.**
**Tokyo 103-8666 (JP)**

(72) Inventors:
• **ISHIKAWA, Norikazu**
  **Nagoya-shi, Aichi 455-8502 (JP)**
• **TAKAMOTO, Tatsuya**
  **Nagoya-shi, Aichi 455-8502 (JP)**
• **TOMIOKA, Nobuyuki**
  **Nagoya-shi, Aichi 455-8502 (JP)**

(74) Representative: **Mewburn Ellis LLP**
  **Aurora Building**
  **Counterslip**
  **Bristol BS1 6BX (GB)**

(54) **MOLDING MATERIAL AND FIBER-REINFORCED COMPOSITE MATERIAL**

(57)   An object of the present invention is to provide a molding material for a fiber-reinforced composite material that suppresses volatilization of a part of components after long-term storage and is excellent in tackiness properties and flowability during press molding. Another object of the present invention is to provide a fiber-reinforced composite material excellent in surface smoothness and mechanical properties even when cured at a high temperature. The present invention is a molding material containing: an epoxy resin composition containing components (A) to (C) below; and reinforcing fibers, wherein a content of the reinforcing fibers in the molding material is 30 mass% or more and 90 mass% or less, a content of the component (A) in the epoxy resin composition is 20 mass% or more and 75 mass% or less, and the epoxy resin composition satisfies the following Formula (1):

component (A): a bisphenol type epoxy resin having a number average molecular weight of 250 or more and 365 or less
component (B): a latent curing agent
component (C): an acid anhydride and/or an isocyanate compound

$$0.14 \leq W_c/W_b \leq 2.00$$

wherein,
$W_b$: number of moles of active hydrogen in the component (B)
$W_c$: number of moles of the component (C).

EP 4 206 264 A1

**Description**

TECHNICAL FIELD

The present invention relates to a molding material preferably used for a fiber-reinforced composite material such as an aerospace member and an automobile member, and a fiber-reinforced composite material using the molding material.

BACKGROUND ART

Fiber-reinforced composite materials containing reinforcing fibers and a matrix resin have been utilized in structural materials of aircraft and automobiles, sports applications such as tennis rackets, golf shafts, and fishing rods, industrial applications, and the like to make use of the high specific strength and specific elastic modulus thereof. As the reinforcing fibers, fibers such as glass fibers, aramid fibers, carbon fibers, and boron fibers are used. From the viewpoint of mechanical properties such as strength and rigidity of the fiber-reinforced composite material to be molded, a molding material for a fiber-reinforced composite material having a high mass content of reinforcing fibers is suitable. As the matrix resin, both thermosetting resins and thermoplastic resins are used. From the viewpoint of heat resistance and producibility, the thermosetting resins are often used. As the thermosetting resin, resins such as epoxy resins, unsaturated polyester resins, vinyl ester resins, phenol resins, bismaleimide resins, and cyanate resins are used. Among them, epoxy resins are suitably used from the viewpoint of adhesiveness between the resin and the reinforcing fibers and dimensional stability.

In production of fiber-reinforced composite materials, a hand lay-up method, a filament winding method, a pultrusion method, a resin transfer molding (RTM) method, press forming methods of molding materials for fiber-reinforced composite materials, such as prepregs, tow prepregs, bulk molding compounds (BMCs), and sheet molding compounds (SMCs), and similar methods are used. These molding materials for fiber-reinforced composite materials are produced by impregnating reinforcing fibers with a matrix resin. BMC and SMC are produced by further allowing the reinforcing fibers after impregnation to stand at normal temperature or heat-treating the reinforcing fibers after impregnation to thicken the resin composition. Examples of a technique known as such a thickening method in the epoxy resin include a technique of dissolving or swelling thermoplastic particles or a thermoplastic resin in an epoxy resin, a technique of reacting an epoxy group with an amine or an acid anhydride to form a crosslinked structure, and a technique of reacting an isocyanate with a hydroxyl group to form a polyurethane in a system.

The molding material for a fiber-reinforced composite material obtained using the above thickening method is rarely used immediately after production, and is generally often used after being stored for 30 days or longer. Therefore, when the molding material for a fiber-reinforced composite material is stored for a long period of 30 days or longer, a part of components thereof is volatilized or thickening further progresses, and there is a problem that the tackiness properties and flowability during press molding of the molding material for a fiber-reinforced composite material are deteriorated. It is therefore necessary to solve such a problem and to stabilize the tackiness properties and flowability during press molding of the molding material for a fiber-reinforced composite material even after long-term storage. In recent years, measures against volatile organic compounds (VOC) in a living environment have been advanced, starting from the problem of Sick House Syndrome. From such a social background, the volatilization amount of organic compounds is regarded as a problem even in an interior environment of automobiles or aircraft. In particular, in the coating field, technological development for reducing the volatilization amount of organic compounds is remarkable, but reduction in volatilization amount of organic compounds of the fiber-reinforced composite material itself to be coated is also beginning to be required. In general, a fiber-reinforced composite material is molded by using a molding material for a fiber-reinforced composite material and heating the molding material at 150°C or lower, whereas in the coating step, the molding material is often treated at a higher temperature of about 160°C to 200°C for several hours. Therefore, there is a problem that a part of components of the surface of the fiber-reinforced composite material is volatilized in this coating step, and the surface smoothness of the volatile fiber-reinforced composite material is deteriorated. Therefore, the fiber-reinforced composite material is required to be excellent in surface smoothness and mechanical properties without volatilization of a part of components even when the obtained fiber-reinforced composite material is treated at a high temperature.

Against such a current situation, a molding material for a fiber-reinforced composite material produced by using an epoxy resin composition containing a bisphenol type epoxy that is liquid at 25°C and an acid anhydride is disclosed (Patent Documents 1 and 2). Further, a molding material for a fiber-reinforced composite material produced by using an epoxy resin composition containing an isocyanate that is liquid at 25°C is disclosed (Patent Document 3).

PRIOR ART DOCUMENTS

PATENT DOCUMENTS

Patent Document 1: International Publication No. 2020/050200
Patent Document 2: International Publication No. 2018/190329
Patent Document 3: International Publication No. 2018/216643

SUMMARY OF THE INVENTION

PROBLEMS TO BE SOLVED BY THE INVENTION

According to the molding material for a fiber-reinforced composite material described in Patent Documents 1 and 2 described above, the molding material for a fiber-reinforced composite material becomes hard due to long-term storage, and the tackiness properties are lowered. Further, the molding material for a fiber-reinforced composite material did not sufficiently flow during molding due to long-term storage, and underfill occurred at the end of the fiber-reinforced composite material. Moreover, when the obtained fiber-reinforced composite material is treated at a high temperature, the surface of the fiber-reinforced composite material is rough, and the smoothness is deteriorated.

According to the molding material for a fiber-reinforced composite material described in Patent Document 3 described above, the variation in the molding material for a fiber-reinforced composite material due to long-term storage is small, but with complicated shapes and increased types of products to which the molding material is applied, there is an object that tackiness properties are controlled at a higher level when the molding material is laminated in a mold having a complicated shape. Further, when a molding material for a fiber-reinforced composite material after long-term storage is molded into a complicated shape, the flowability of the molding material for a fiber-reinforced composite material needs to be controlled at a higher level. Moreover, when the obtained fiber-reinforced composite material is treated at a high temperature, the surface smoothness of the fiber-reinforced composite material needs to be maintained at a higher level.

Therefore, an object of the present invention is to provide a molding material for a fiber-reinforced composite material that suppresses volatilization of a part of components after long-term storage and is excellent in tackiness properties and flowability during press molding. Another object of the present invention is to provide a fiber-reinforced composite material excellent in surface smoothness and mechanical properties even when cured at a high temperature.

SOLUTIONS TO THE PROBLEMS

The present invention adopts the following constitution to solve the problem described above.

That is, the present invention is a molding material containing: an epoxy resin composition containing components (A) to (C) below; and reinforcing fibers, wherein a content of the reinforcing fibers in the molding material is 30 mass% or more and 90 mass% or less, a content of the component (A) in the epoxy resin composition is 20 mass% or more and 75 mass% or less, and the epoxy resin composition satisfies the following Formula (1):

component (A): a bisphenol type epoxy resin having a number average molecular weight of 250 or more and 360 or less
component (B): a latent curing agent
component (C): at least one compound selected from the group consisting of an acid anhydride and an isocyanate compound

$$0.14 \leq Wc/Wb \leq 2.00 \quad ... \quad (1)$$

wherein,
Wb: number of moles of active hydrogen in the component (B)
Wc: number of moles of the component (C).

The present invention is also a fiber-reinforced composite material obtained by curing the molding material of the present invention.

EFFECTS OF THE INVENTION

According to the present invention, it is possible to provide a molding material for a fiber-reinforced composite material that suppresses volatilization of a part of components after long-term storage and is excellent in tackiness properties and flowability during press molding. The use of such a molding material for a fiber-reinforced composite material makes it possible to provide a fiber-reinforced composite material excellent in surface smoothness and mechanical properties even when the molding material is cured at a high temperature.

EMBODIMENTS OF THE INVENTION

Preferred embodiments of the present invention will be described below.

(Molding material)

The molding material of the present invention contains an epoxy resin composition and reinforcing fibers.

(Epoxy resin composition)

The epoxy resin composition in the molding material of the present invention contains the following components (A) to (C):

component (A): a bisphenol type epoxy resin having a number average molecular weight of 250 or more and 365 or less
component (B): a latent curing agent
component (C): an acid anhydride and/or an isocyanate compound.

(Component (A))

The component (A) in the present invention is a component necessary for exhibiting heat resistance and mechanical properties. Here, the bisphenol type epoxy resin means a compound containing one or more epoxy groups and having a bisphenol skeleton in the molecule.
The number average molecular weight of the epoxy resin is determined by gel permeation chromatography (GPC) using a polystyrene standard sample. The number average molecular weight of the epoxy resin in the molding material can be determined by extracting a resin component from the molding material with a solvent, and analyzing the obtained extract by GPC.
In the molecular weight distribution for measurement of the number average molecular weight, when there is a peak outside the above range and there is a valley due to overlapping with the skirt of the peak, peaks are divided at the point of the minimum value in the valley.
It is important that the bisphenol type epoxy resin of the component (A) has a number average molecular weight of 250 or more and 365 or less. When the number average molecular weight is 250 or more, preferably 300 or more, the bisphenol type epoxy resin can be made less volatile during production, molding, and long-term storage of the molding material. When the number average molecular weight is 365 or less, preferably 350 or less, the epoxy resin composition can have a low viscosity and excellent impregnating properties into the reinforcing fibers.
Examples of the bisphenol type epoxy resin of the component (A) include bisphenol A type epoxy resins, bisphenol F type epoxy resins, and epoxy resins obtained by modifying these resins. Two or more of these resins may be used in combination. Among them, bisphenol F type epoxy excellent in impregnating properties into the reinforcing fibers can be suitably used.
Examples of commercially available products of the bisphenol A type epoxy resin include "jER (registered trademark)" 825, "jER (registered trademark)" 826 (as described above, manufactured by Mitsubishi Chemical Corporation), "EPICLON (registered trademark)" 850-CRP (manufactured by DIC Corporation), "Epotohto (registered trademark)" YD8125 (manufactured by Nippon Steel & Sumikin Chemical Co., Ltd.), and "DER (registered trademark)"-330.
Examples of commercially available products of the bisphenol F type epoxy resin include "jER (registered trademark)" 806, "jER (registered trademark)" 807 (as described above, manufactured by Mitsubishi Chemical Corporation), "EPICLON (registered trademark)" 830 (manufactured by DIC Corporation), "Epotohto (registered trademark)" YDF170, "Epotohto (registered trademark)" YDF175, and "Epotohto (registered trademark)" YDF8170 (as described above, manufactured by Nippon Steel & Sumikin Chemical Co., Ltd.).
It is important that the content of the component (A) in the epoxy resin composition is 20 mass% or more and 75 mass% or less. When the mass ratio of the component (A) is 20 mass% or more, preferably 40 mass% or more, good flowability can be exhibited even after long-term storage. When the mass ratio is 75 mass% or less, preferably 70 mass% or less, an effect of sufficiently improving tackiness properties can be obtained even after long-term storage.

(Component (B))

The latent curing agent of the component (B) in the present invention is required for heat resistance and curing speed control. The component (B) is not particularly limited as long as it has active hydrogen and can cure the epoxy resin, and examples thereof include amine-based, phenol-based, mercaptan-based, imidazole-based curing agents, organic phosphorus compounds, urea compounds, ammonium salts, and sulfonium salts.

Examples of the amine-based curing agent include dicyandiamide, aromatic polyamines, aliphatic amines, aminobenzoic acid ester type curing agents, thiourea added amines, and hydrazides. Examples of the phenol-based curing agent include bisphenols, phenol novolac resins, cresol novolac resins, and polyphenol compounds. Examples of the mercaptan-based curing agent include polymercaptan and polysulfide resins. Among the exemplified compounds, dicyandiamide or a derivative thereof, and an imidazole-based compound are preferable from the viewpoint of curing speed. Dicyandiamide or a derivative thereof is more preferable. The derivative of dicyandiamide means a compound obtained by bonding dicyandiamide to some kinds of compounds. Dicyandiamide and a derivative thereof are particularly excellent in imparting high bending strength and heat resistance to the cured resin, and are also excellent in storage stability of the resin composition.

Examples of the derivative of dicyandiamide include those obtained by bonding dicyandiamide to some kinds of compounds such as an epoxy resin, a vinyl compound, an acrylic compound, and 9,10-dihydro-9-oxa-10-phosphaphenanthrene-10-oxide.

Examples of the imidazole-based compound include 2-methylimidazole, 2-phenylimidazole, 2-undecylimidazole, 2-heptadecylimidazole, 2-ethyl-4-methylimidazole, 2-methylimidazolium isocyanurate, 2-phenylimidazolium isocyanurate, and 2,4-diamino-6-[2'-methylimidazolyl-(1')-ethyl]-triazine.

These compounds may be used alone or in combination of two or more. When two or more compounds are used in combination, volatilization during curing can be further suppressed by more precisely controlling the starting temperature of the epoxy curing reaction, which is preferable.

Examples of commercially available products of dicyandiamide include DICY7 and DICY15 (as described above, manufactured by Mitsubishi Chemical Corporation).

Examples of commercially available products of imidazole include "CUREZOL (registered trademark)" 1,2DMZ, "CUREZOL (registered trademark)" 2E4MZ, "CUREZOL (registered trademark)" C11Z, "CUREZOL (registered trademark)" C17Z, "CUREZOL (registered trademark)" 2PZ-PW, "CUREZOL (registered trademark)" 2P4MZ, "CUREZOL (registered trademark)" 2MZ-CN, "CUREZOL (registered trademark)" 1B2MZ, "CUREZOL (registered trademark)" 2PZCNS-PW, "CUREZOL (registered trademark)" 2MA-OK, "CUREZOL (registered trademark)" 2MZA-PW, "CUREZOL (registered trademark)" 2E4MA-A, "CUREZOL (registered trademark)" C11Z-A, and "CUREZOL (registered trademark)" 2P4MHZ-PW (as described above, manufactured by Shikoku Chemicals Corporation).

The melting point of the component (B) is preferably 200°C or higher and 300°C or lower. When the melting point is 200°C or higher, flowability during molding can be maintained at the same level as that immediately after production, even after long-term storage of the molding material. When the melting point is 300°C or lower, the molding material can be molded using a general mold or oven used for press molding.

The content of the component (B) in the epoxy resin composition is preferably 1 mass% or more and 15 mass% or less. When the content of the component (B) is 1 mass% or more, more preferably 5 mass% or more, an effect of sufficiently improving curability can be obtained. When the content is 15 mass% or less, more preferably 10 mass% or less, the heat resistance of a cured material of the epoxy resin composition can be effectively obtained.

(Component (C))

The component (C) is an acid anhydride and/or an isocyanate compound, and is a component necessary for excellent tackiness properties and flowability in the present invention.

The acid anhydride of the component (C) is only required to be a compound having one or more acid anhydride groups that can react with an epoxy group or a hydroxyl group of the component (A) or component (D) in one molecule, and particularly, a carboxylic anhydride is preferable. Examples of the carboxylic anhydride include phthalic anhydride, tetrahydrophthalic anhydride, hexahydrophthalic anhydride, methyltetrahydrophthalic anhydride, methylhexahydrophthalic anhydride, methylnadic acid, hydrogenated methylnadic acid, trialkyltetrahydrophthalic anhydride, octenylsuccinic anhydride, tetrapropenylsuccinic anhydride, pyromellitic dianhydride, 4,4'-oxydiphthalic dianhydride, 3,3',4,4'-biphenyltetracarboxylic dianhydride, 2,2'-dimethyl-3,3',4,4'-biphenyltetracarboxylic dianhydride, 5,5'-dimethyl-3,3',4,4'-biphenyltetracarboxylic dianhydride, 1,2,3,4-butanetetracarboxylic dianhydride, and methylcyclohexene tetracarboxylic dianhydride. Among them, methyltetrahydrophthalic anhydride, methylhexahydrophthalic anhydride, or hydrogenated methylnadic acid is preferable because the epoxy resin composition is easily impregnated into the reinforcing fibers while suppressing volatilization in production of the molding material.

Examples of commercially available products of the acid anhydride include "RIKACID (registered trademark)" MH-700, "RIKACID (registered trademark)" MH-700G, "RIKACID (registered trademark)" MH, "RIKACID (registered trademark)" MH-T, "RIKACID (registered trademark)" MTA-15, "RIKACID (registered trademark)" OSA, "RIKACID (registered trademark)" DDSA, "RIKACID (registered trademark)" HNA-100, "RIKACID (registered trademark)" TH, "RIKACID (registered trademark)" HH, "RIKACID (registered trademark)" SA, "RIKACID (registered trademark)" BT-100, "RIKACID (registered trademark)" TDA-100 (as described above, manufactured by New Japan Chemical Co., Ltd.), HN-2200, HN-2000, HN-5500, and MHAC-P (as described above, manufactured by Hitachi Chemical Co., Ltd.).

In order to further improve the heat resistance of the fiber-reinforced composite material, it is more preferable to contain an isocyanate compound as the component (C).

The isocyanate compound of the component (C) is only required to have one or more isocyanate groups in one molecule, and known aliphatic isocyanates and aromatic isocyanates can be used.

Examples of the isocyanate compound include aromatic isocyanates such as ethylene diisocyanate, trimethylene diisocyanate, dodecamethylene diisocyanate, hexamethylene diisocyanate, tetramethylene diisocyanate, pentamethylene diisocyanate, propylene-1,2-diisocyanate, 2,3-dimethyltetramethylene diisocyanate, butylene-1,2-diisocyanate, butylene-1,3-diisocyanate, 1,4-diisocyanate hexane, cyclopentene-1,3-diisocyanate, isophorone diisocyanate, 1,2,3,4-tetraisocyanatobutane, butane-1,2,3-triisocyanate, p-phenylene diisocyanate, 1-methylphenylene-2,4-diisocyanate, naphthalene-1,4-diisocyanate, tolylene diisocyanate, diphenyl 4,4-diisocyanate, benzene-1,2,4-triisocyanate, xylylene diisocyanate, diphenylmethane diisocyanate (MDI), diphenylpropane diisocyanate, tetramethylene diisocyanate, and polymethylene polyphenyl polyisocyanate, and those having a structure in which these aromatic isocyanates are linked by a methylene group or the like. Among them, an aromatic isocyanate is preferable because a cured epoxy resin has excellent heat resistance.

It is also possible to use a prepolymer obtained by prepolymerizing the above-mentioned polyisocyanate compounds with a polyol compound. In addition, these polyisocyanate compounds and the like may be used alone or in combination of two or more.

Examples of commercially available products of the isocyanate include "Duranate (registered trademark)" D101, "Duranate (registered trademark)" D201 (as described above, manufactured by Asahi Kasei Corporation), "Lupranate (registered trademark)" MS, "Lupranate (registered trademark)" MI, "Lupranate (registered trademark)" M20S, "Lupranate (registered trademark)" M11S, "Lupranate (registered trademark)" M5S, "Lupranate (registered trademark)" T-80, "Lupranate (registered trademark)" MM-103, "Lupranate (registered trademark)" MP-102, "Lupranate (registered trademark)" MB-301 (as described above, manufactured by BASF INOAC Polyurethanes Ltd.), HDI, "Millionate (registered trademark)" MR-100, "Millionate (registered trademark)" MR-200, "Millionate (registered trademark)" MR-400, "Coronate (registered trademark)" T-80, "Coronate (registered trademark)" T-65, "Coronate (registered trademark)" T-100 (as described above, manufactured by Tosoh Corporation), "COSMONATE (registered trademark)" PH, "COSMONATE (registered trademark)" T-80, "Takenate (registered trademark)" 500, "Takenate (registered trademark)" 600, "NBID (registered trademark)" norbornane disocyanate, "Millionate (registered trademark)" MTL, "COSMONATE (registered trademark)" LL, "COSMONATE (registered trademark)" LK, "COSMONATE (registered trademark)" LT, "COSMONATE (registered trademark)" LI (as described above, manufactured by Mitsui Chemicals, Inc.), "Sumidur (registered trademark)" N3300, "Desmodur (registered trademark)" N3400 (as described above, manufactured by Sumika Covestro Urethane Co., Ltd.) "Desmodur (registered trademark)" I, and "Desmodur (registered trademark)" W (as described above, manufactured by Sumika Covestro Urethane Co., Ltd.).

When an acid anhydride and an isocyanate are used in combination as the component (C), both an ester bond and a urethane bond can be introduced into the skeleton of a polymer produced by reacting with an epoxy group or a hydroxyl group. This is preferable because a hydrogen bond can be easily formed, and volatilization of components can be further suppressed.

The viscosity of the component (C) at 25°C is preferably 1 mPa-s or more and 1,000 mPa-s or less. When the viscosity is 1 mPa-s or more, it is preferable because the components are hardly volatilized during production, molding, and long-term storage of the molding material, and when the viscosity is 1,000 mPa·s or less, it is preferable because the molding material exhibits appropriate tackiness properties.

The epoxy resin composition in the present invention satisfies the following Formula (1):

$$0.14 \leq Wc/Wb \leq 2.00 \ \ \ \ \ (1)$$

wherein,

Wb: number of moles of active hydrogen in the component (B)

Wc: number of moles of the component (C).

When Wc/Wb is 0.14 or more, preferably 0.20 or more, the acid anhydride group and/or the isocyanate group in the component (C) suppress the reaction between the active hydrogen in the component (B) with the epoxy group during storage, and thus good tackiness properties can be maintained even in long-term storage. When Wc/Wb is 2.00 or less, preferably 0.80 or less, active hydrogen in the component (B) that can form a hydrogen bond with an oxygen atom on an acid anhydride group and/or an isocyanate group is sufficiently present, and thus components volatilizing from an uncured epoxy resin composition can be suppressed.

The content of the component (C) is preferably 1 part by mass or more and 40 parts by mass or less based on 100 parts by mass of all the epoxy resin components in the epoxy resin composition. When the content is 1 part by mass or more, more preferably 10 parts by mass or more, and still more preferably 15 parts by mass or more, the molding material can exhibit excellent tackiness properties. When the content is 40 parts by mass or less, more preferably 35 parts by mass or less, volatilization of components can be suppressed during production, molding, and long-term storage of the molding material.

(Component (D))

In the molding material of the present invention, the epoxy resin composition preferably further contains a bisphenol type epoxy resin having a number average molecular weight of 366 or more and 1,000 or less, as a component (D). The component (D) contributes to more precisely controlling the tackiness properties of the molding material.

In the molecular weight distribution for measurement of the number average molecular weight, when there is a peak outside the above range and there is a valley due to overlapping with the skirt of the peak, peaks are divided at the point of the minimum value in the valley.

When the number average molecular weight of the component (D) is 366 or more, the heat resistance of the fiber-reinforced composite material is more excellent. When the number average molecular weight is 1,000 or less, preferably 800 or less, a cured material of the epoxy resin composition can exhibit excellent bending strain properties.

Examples of the component (D) include bisphenol A type epoxy resins, bisphenol F type epoxy resins, and epoxy resins obtained by modifying these resins. Two or more of these resins may be used in combination. Among them, a bisphenol A type epoxy having excellent bending strain properties of a cured material of the epoxy resin composition can be suitably used.

Examples of commercially available products of the bisphenol A type epoxy resin include "jER (registered trademark)" 825, "jER (registered trademark)" 826, "jER (registered trademark)" 827, "jER (registered trademark)" 828, "jER (registered trademark)" 834, "jER (registered trademark)" 1001, "jER (registered trademark)" 1002, "jER (registered trademark)" 1003, "jER (registered trademark)" 1004, "jER (registered trademark)" 1004AF, "jER (registered trademark)" 1007, and "jER (registered trademark)" 1009 (as described above, manufactured by Mitsubishi Chemical Corporation), "EPICLON (registered trademark)" 850 (manufactured by DIC Corporation), "Epotohto (registered trademark)" YD128 (manufactured by Nippon Steel & Sumikin Chemical Co., Ltd.), "DER (registered trademark)" -331, and "DER (registered trademark)" -332 (manufactured by The Dow Chemical Company).

Examples of commercially available products of the bisphenol F type epoxy resin include "jER (registered trademark)" 806, "jER (registered trademark)" 807, "jER (registered trademark)" 1750, "jER (registered trademark)" 4004P, "jER (registered trademark)" 4007P, and "jER (registered trademark)" 4009P (as described above, manufactured by Mitsubishi Chemical Corporation), "EPICLON (registered trademark)" 830 (manufactured by DIC Corporation), "Epotohto (registered trademark)" YDF-170, "Epotohto (registered trademark)" YDF2001, and "Epotohto (registered trademark)" YDF2004 (as described above, manufactured by Nippon Steel & Sumikin Chemical Co., Ltd.). Examples of commercially available products of a tetramethyl bisphenol F type epoxy resin that is an alkylsubstituted derivative include "Epotohto (registered trademark)" YSLV-80XY (manufactured by Nippon Steel & Sumikin Chemical Co., Ltd.).

Examples of a bisphenol S epoxy resin include "EPICLON (registered trademark)" EXA-1515 (manufactured by DIC Corporation).

The content of the component (D) in all the epoxy resin components in the epoxy resin composition is preferably 10 mass% or more and 70 mass% or less. When the mass ratio of the component (A) is 10 mass% or more, sufficient heat resistance can be exhibited, which is preferable, and when the mass ratio of the component (A) is 70 mass% or less, an effect of sufficiently improving bending strain properties can be obtained, which is preferable.

(Component (E))

The epoxy resin composition in the present invention preferably further contains a compound containing a carboxy group, as a component (E). Here, the carboxy group is a functional group represented by COOH in the chemical formula. The component (E) may be a compound produced by reacting a part of the component (C) with water. The component (E) is a component for suppressing volatilization of components in the molding material by formation of a hydrogen bond in the system when the molding material is stored for a long period of time. A known compound can be used as the component (E) as long as it is a compound containing one or more carboxy groups in one molecule.

Examples of the component (E) include a carboxylic acid, an amino acid, and a carbamic acid. Among them, a carboxylic acid having from 7 to 20 carbon atoms is preferable. When the number of carbon atoms is 7 or more, a hydrogen bond can be easily formed, and when the number of carbon atoms is 20 or less, compatibility with the epoxy resin composition is excellent.

Examples of the carboxylic acid include acetic acid, butyric acid, caproic acid, enanthic acid, lauric acid, myristic acid, palmitic acid, margaric acid, stearic acid, oleic acid, linoleic acid, linolenic acid, sorbic acid, and carboxylic acid obtained by hydrolyzing a part of the acid anhydride of the component (C).

Examples of the carbamic acid include carbamic acid, and carbamic acid obtained by hydrolyzing a part of the isocyanate of the component (C). In addition, these compounds containing a carboxy group and the like may be used alone or in combination of two or more.

The epoxy resin composition in the present invention preferably satisfies the following Formula (2).

$$1 \leq (Me/Mc) \times 100 \leq 90 \ ... \ (2)$$

Me: number of moles of the component (C)

Me: number of moles of carboxy group of the component (E)

When $(Me/Mc) \times 100$ is 1 or more, the carbonyl group and the isocyanate group of the component (C) and the carboxy group of the component (E) effectively form a hydrogen bond, and thus volatilization of components can be further suppressed. When $(Me/Mc) \times 100$ is 90 or less, more preferably 60 or less, a cured material of the epoxy resin composition can effectively exhibit excellent bending strain properties.

(Component (F))

The epoxy resin composition in the present invention preferably further contains a glycidylamine type epoxy resin as a component (F). The component (F) functions as a component that improves the tackiness properties of the molding material and the heat resistance of the fiber-reinforced composite material.

As an example of the component (F), a diaminodiphenylmethane type epoxy resin, an aminophenol type epoxy resin, a diaminodiphenyl sulfone type epoxy resin, a xylylenediamine type epoxy resin, and the like are suitably used.

Examples of commercially available products of the diaminodiphenylmethane type epoxy resin include "SUMI-EPOXY (registered trademark)" ELA434 (manufactured by Sumitomo Chemical Co., Ltd.), YH434L (manufactured by Nippon Steel & Sumikin Chemical Co., Ltd.), "jER (registered trademark)" 604 (manufactured by Mitsubishi Chemical Corporation), "ARALDITE (registered trademark)" MY720, and "ARALDITE (registered trademark)" MY721 (as described above, manufactured by Huntsman Advanced Materials).

Examples of commercially available products of the aminophenol type epoxy resin include "SUMI-EPOXY (registered trademark)" ELA100, "SUMI-EPOXY (registered trademark)" ELA120 (as described above, manufactured by Sumitomo Chemical Co., Ltd.), "ARALDITE (registered trademark)" MY0500, "ARALDITE (registered trademark)" MY0510, and "ARALDITE (registered trademark)" MY0600 (as described above, manufactured by Huntsman Advanced Materials).

Examples of commercially available products of the diaminodiphenyl sulfone type epoxy resin include TG3DAS (manufactured by Mitsui Fine Chemicals, Inc.).

Examples of commercially available products of the xylylenediamine type epoxy resin include TETRAD-X (manufactured by Mitsubishi Gas Chemical Company, Inc.).

The content of the component (F) in all the epoxy resin components in the epoxy resin composition is preferably 8 mass% or more and 20 mass% or less. When the content is 8 mass% or more, the fiber-reinforced composite material can effectively exhibit excellent heat resistance. When the content is 20 mass% or less, more preferably 15 mass% or less, volatilization of components when the molding material is stored for a long period of time can be suppressed.

(Other components)

The epoxy resin composition may contain a thermoplastic resin soluble in an epoxy resin, a reactive diluent, particles, and an internal release agent for the purpose of adjusting viscoelasticity and improving tack and drape properties of the molding material, enhancing mechanical properties and toughness of the resin composition, and the like, as long as the effect of the present invention is not lost.

(Thermoplastic resin)

Examples of the thermoplastic resin soluble in an epoxy resin may include polyvinyl acetal resins such as polyvinyl formal and polyvinyl butyral, polyvinyl alcohol, phenoxy resin, polyamide, polyimide, polyvinyl pyrrolidone, and polysulfone.

(Reactive diluent)

As the reactive diluent, an aliphatic epoxy resin is preferable because it can reduce the viscosity of the epoxy resin composition and enhance the impregnating properties into carbon fibers.

As a monofunctional aliphatic epoxy resin, a glycidyl ether of a monovalent aliphatic alcohol is preferable, and a monovalent aliphatic alcohol having from 4 to 12 carbon atoms, in which a hydroxyl group is bonded to a linear or branched hydrocarbon group, is more preferable.

Examples of the monovalent aliphatic alcohol include butyl alcohol, isobutyl alcohol, s-butyl alcohol, 2-ethylhexanol, stearyl alcohol, isostearyl alcohol, and lauryl alcohol.

As the bifunctional or higher aliphatic epoxy resin, a polyglycidyl ether of a dihydric or higher aliphatic alcohol is preferable. As such an aliphatic alcohol, a dihydric or higher aliphatic alcohol having from 4 to 10 carbon atoms, in which a hydroxyl group is bonded to a linear or branched hydrocarbon group, is more preferable.

Examples of the dihydric or higher aliphatic alcohol include 1,4-butanediol, 3-methyl-1,5-pentanediol, diethylene glycol, neopentyl glycol, 1,6-hexanediol, 1,9-nonanediol, cyclohexanedimethanol, propylene glycol, glycerin, and trimethylolpropane.

Either one of the monofunctional and bifunctional or higher functional aliphatic epoxy resins may be used, or both of them may be used. In particular, a bifunctional or higher functional aliphatic epoxy resin is preferable because the viscosity of the epoxy resin composition can be reduced without significantly impairing the bending properties of the fiber-reinforced composite material.

The aliphatic epoxy resin may be used alone or in combination of two or more.

In order to sufficiently lower the viscosity of the epoxy resin composition, the viscosity of the aliphatic epoxy resin at 25°C is preferably 200 mPa-s or less, and more preferably 150 mPa-s or less.

(Particles)

As the particles, for example, organic particles such as rubber particles and thermoplastic resin particles, inorganic particles such as silica particles, and nanoparticles such as CNT, graphene, and carbon black can be selected. Examples of the rubber particles include cross-linked rubber particles, and core-shell rubber particles obtained by graft-polymerizing a heterogeneous polymer onto the surface of cross-linked rubber particles.

(Internal release agent)

Examples of the internal release agent include metal soaps, vegetable waxes such as polyethylene wax and carnauba wax, an ester compound of a fatty acid and an aliphatic alcohol, an ester compound of a polyvalent carboxylic acid and an aliphatic alcohol, an ester compound of a polyhydric alcohol and a fatty acid, aliphatic alcohols, fatty acid amides, a metal salt of a fatty acid, silicon oil, animal waxes, and fluorine-based nonionic surfactants.

Examples of commercially available products of the internal release agent include UNT-750 (manufactured by Marubishi Oil Chemical Corporation) "MOLD WIZ (registered trademark)" INT1846 (manufactured by AXEL PLASTICS RESEARCH LABORATORIES INC.), Licowax S, Licowax P, Licowax OP, Licowax PE190, Licowax PED (manufactured by Clariant Japan K.K.), SL-900A (manufactured by Riken Vitamin Co., Ltd.), and zinc stearate (Kawamura Kasei Industry Co., Ltd.).

The amount of the internal release agent blended in the epoxy resin composition is preferably 0.1 to 5 mass%, and more preferably 0.2 to 2 mass%. Within this range, the release effect from the mold is suitably exhibited.

The epoxy resin composition in the present invention preferably has a viscosity at 25°C of 0.1 Pa-s or more and 3.0 Pa-s or less, as measured with an E-type viscometer. An epoxy resin composition having a viscosity at 25°C of 0.1 Pa-s or more has excellent impregnating properties into the reinforcing fibers. An epoxy resin composition having a viscosity at 30°C of 3.0 Pa-s or less, more preferably 2.0 Pa-s or less will not have too low a viscosity during resin impregnation, and is easily impregnated uniformly into the reinforcing fibers. The viscosity is determined by subjecting the epoxy resin composition, which is obtained after mixing the components and stirring the components for one minute, to the measurement.

In the epoxy resin composition used in the present invention, the volatilization amount when the epoxy resin composition is heated at 40°C for 24 hours to be thickened and the volatilization amount when the epoxy resin composition is cured at 150°C for 30 minutes are both preferably 0.01 mass% or more and 5.00 mass% or less. By suppressing both of the volatilization amount during thickening and the volatilization amount during curing of the epoxy resin composition, it is possible to suppress remaining of the volatile components in the fiber-reinforced composite material obtained by curing the molding material. When the volatilization amounts are both 0.01 mass% or more, volatilization of components when the molding material is stored for a long period of time is extremely reduced. When the volatilization amounts are both 5.00 mass% or less, more preferably 2.00 mass% or less, the surface smoothness of the fiber-reinforced composite material is improved.

In the present invention, a value measured based on VDA277 is used as the volatilization amount. Specifically, the volatilization amount is measured by a gas chromatograph equipped with a flame ionization detector (GC-FID) using DB-WAXETR (manufactured by Agilent Technologies, Inc., length: 30 m, inner diameter: 0.25 mm, membrane pressure: 0.25 um) as a column.

In the epoxy resin composition in the present invention, the volatilization amount when a cured material obtained by heating the epoxy resin composition at 150°C for 30 minutes is heated at 120°C for 5 hours is preferably 1 $\mu$g/g or more and 100 $\mu$g/g or less. When the volatilization amount is 1 $\mu$g/g or more, the volatilization of components when the fiber-reinforced composite material is stored at room temperature, for example, 25°C for a long period of time is extremely reduced. When the volatilization amount is 100 $\mu$g/g or less, more preferably 50 $\mu$g/g or less, deterioration of the surface smoothness is suppressed even after the fiber-reinforced composite material is stored for a long period of time.

In the epoxy resin composition in the present invention, the bending strain of a 2 mm thick cured material obtained by completely curing the epoxy resin composition by heating at a temperature of 150°C for 30 minutes, as measured by the three-point bending test in JIS K7074, is preferably 3.5% or more. The mechanical properties of the fiber-reinforced composite material according to the present invention depend on the mechanical properties of a cured material obtained by curing the epoxy resin composition. When the bending strain of the cured material is 3.5% or more, more preferably 4.0% or more, a fiber-reinforced composite material formed of such a cured material can be used as an excellent member that is not broken even under an environment where strong stress is applied from the outside.

The epoxy resin composition in the present invention preferably has a glass transition temperature of 120°C or higher and 250°C or lower when completely cured by heating at a temperature of 150°C for 30 minutes. The heat resistance of the fiber-reinforced composite material obtained using the epoxy resin composition according to the present invention depends on the glass transition temperature of the cured resin obtained by curing the epoxy resin composition. When the glass transition temperature is 120°C or higher, more preferably 130°C or higher, high heat resistance is imparted to the cured resin obtained by curing the epoxy resin composition. When the glass transition temperature is 250°C or lower, more preferably 220°C or lower, the crosslinking density of the three-dimensional crosslinked structure of the cured resin does not become too high, and high mechanical properties are exhibited.

The glass transition temperature of the cured epoxy resin is determined by measurement using a dynamic viscoelasticity measuring apparatus (DMA). Specifically, DMA measurement is performed at elevated temperature using a rectangular test piece cut out from a cured resin plate, and the temperature at the inflection point of the obtained storage modulus G' is defined as Tg. The measurement conditions are as described in Examples.

(Reinforcing fibers)

Examples of the reinforcing fibers in the present invention include glass fibers, carbon fibers, graphite fibers, aramid fibers, boron fibers, alumina fibers, and silicon carbide fibers. Although two or more of these reinforcing fibers may be mixed and used, it is preferable to use carbon fibers or graphite fibers in order to obtain a molded article that is lighter and has higher durability. In particular, in applications in which weight reduction and high strength of the material are highly demanded, carbon fibers are preferably used because of excellent specific elastic modulus and specific strength.

The tensile elastic modulus of the carbon fibers is preferably 230 GPa or more and 400 GPa or less from the viewpoint of impact resistance.

The tensile strength of the carbon fibers is preferably 4.4 GPa or more and 6.5 GPa or less because a composite material having high rigidity and mechanical strength can be obtained.

The tensile elongation of the carbon fibers is preferably 1.7% or more and 2.3% or less.

The average fiber diameter of the carbon fibers is preferably 3 um or more and 12 um or less.

Examples of commercially available products of carbon fibers include "TORAYCA (registered trademark)" T800G-24K, "TORAYCA (registered trademark)" T800S-24K, "TORAYCA (registered trademark)" T700G-24K, "TORAYCA (registered trademark)" T300-3K, and "TORAYCA (registered trademark)" T700S-12K (as described above, manufactured by Toray Industries, Inc.), "PYROFIL (registered trademark)" TR50S-3L, "PYROFIL (registered trademark)" TR50S-6L, "PYROFIL (registered trademark)" TR50S-15L, "PYROFIL (registered trademark)" TRH50-60M, and "PYROFIL (registered trademark)" TRH40-50L (as described above, manufactured by Mitsubishi Chemical Corporation).

When continuous reinforcing fibers are used, examples of the form of the reinforcing fibers include fiber structures such as long fibers in which filaments are arranged in one direction, single tows, woven fabrics, knits, non-woven fabrics, mats, and braids.

Preferably, the reinforcing fibers in the present invention are discontinuous reinforcing fibers having a number average fiber length of 3 mm or more and 100 mm or less, the discontinuous reinforcing fibers are substantially randomly oriented as a bundle assembly in the molding material, and the bulkiness Bm of the bundle assembly of discontinuous reinforcing fibers, calculated by the following Formula (3), is 1.5 cm$^3$/g or more and 5 cm$^3$/g or less.

$$Bm = Tm/Fm \ldots \quad (3)$$

wherein,

Bm: bulkiness (cm$^3$/g)
Tm: thickness of bundle assembly of discontinuous reinforcing fibers (cm)
Fm: mass of discontinuous reinforcing fibers per unit area in molding material (g/cm$^2$).

The bulkiness Bm of the bundle assembly of discontinuous reinforcing fibers is a characteristic value specified from the shape (length, width, thickness, straightness, angle, and the like) of the bundle of discontinuous reinforcing fibers and the orientation of the discontinuous reinforcing fibers in the in-plane direction and the out-of-plane (thickness) direction of the bundle assembly.

When the bulkiness is 1.5 cm$^3$/g or more, gaps between bundles of discontinuous reinforcing fibers and gaps in the bundles are secured when the bundle assembly of discontinuous reinforcing fibers is impregnated with the epoxy resin composition in order to obtain a molding material, and poor impregnation of the epoxy resin composition is prevented. Thus, a molding material and fiber-reinforced composite material having stable quality can be effectively obtained. When the bulkiness is 5 cm$^3$/g or less, the thickness of the bundle assembly of discontinuous reinforcing fibers is reduced when the bundle assembly of discontinuous reinforcing fibers is impregnated with the epoxy resin composition in order to obtain a molding material, and poor impregnation of the epoxy resin composition is prevented, so that a molding material and fiber-reinforced composite material having stable quality can be effectively obtained.

The measurement of Tm and Fm in the above formula is performed as follows. First, the mass Fm (fiber areal weight) of reinforcing fibers per unit area in the molding material is measured. Next, the thickness Tm of the bundle assembly of discontinuous reinforcing fibers is measured with a thickness meter under the condition of 0.1 kN in accordance with ISO 5084 (1996).

The number average fiber length of the bundle of discontinuous reinforcing fibers is preferably 3 mm or more and 100 mm or less. When the number average fiber length is 100 mm or less, a molding material obtained by using such a bundle of discontinuous reinforcing fibers can have excellent conformity to a complicated shape at molding. When the number average fiber length is 3 mm or more, more preferably 5 mm or more, a reinforcing effect provided by the reinforcing fibers can be effectively obtained.

The number average fiber length of the bundle of discontinuous reinforcing fibers is measured as follows. For 100 bundles of discontinuous reinforcing fibers randomly selected from the bundle assembly of discontinuous reinforcing fibers, an average value of the fiber lengths measured at three or more points in one bundle of discontinuous reinforcing fibers is calculated. The average of 100 bundles is defined as the number average fiber length. The measurement is performed on a computer using image processing software.

The average number of filaments in the bundle of discontinuous reinforcing fibers is preferably 500 or more and less than 12,000. When the average number of filaments of the bundle of discontinuous reinforcing fibers is 500 or more, it is possible to prevent the bundle of discontinuous reinforcing fibers from bending with respect to the fiber longitudinal direction of the fibers, maintain the straightness of the fibers in the processing step until the fiber-reinforced composite material is produced, and effectively obtain a reinforcing effect provided by the reinforcing fibers when the fiber-reinforced composite material is produced, that is, improvement in mechanical properties, particularly, strength. On the other hand, when the average number of filaments is less than 12,000, it is possible to suppress concentration of stress at the end of discontinuous reinforcing fiber bundles when a fiber-reinforced composite material is produced, and suppress variation in mechanical properties, particularly, strength.

The average number of filaments of the bundle of discontinuous reinforcing fibers is measured as follows. The masses of 100 bundles of discontinuous reinforcing fibers after measurement of the number average fiber length are measured. In one bundle of discontinuous reinforcing fibers, the number of filaments is calculated from the fiber length, mass, specific gravity, and fiber diameter. The average of 100 bundles is defined as the average number of filaments.

The bundles of discontinuous reinforcing fibers are preferably oriented substantially randomly. The phrase "substantially randomly oriented" means that, when the fiber longitudinal direction of the chopped fiber bundles constituting the bundle assembly of discontinuous reinforcing fibers is classified into four directions arranged at a 45° pitch (-90° ≤ θ < -45°, -45° ≤ θ < 0°, 0° ≤ θ < 45°, 45° ≤ θ < 90°) from -90° to 90° starting from any direction, the proportion of the bundles of discontinuous reinforcing fibers oriented in each direction in the entire bundle assembly is relatively uniformly distributed within a range of 25 ± 2.5%. When the bundles of discontinuous reinforcing fibers are substantially randomly oriented, a molding material obtained by impregnating the bundle assembly of discontinuous reinforcing fibers with the epoxy resin composition can be handled as an isotropic material, thus making it easy to design when a fiber-reinforced composite material is molded using the molding material.

The fiber orientation of the bundle of discontinuous reinforcing fibers is measured as follows. First, the bundle assembly of discontinuous reinforcing fibers is sliced in the in-plane direction of the bundle assembly so that 90% or more of bundles of discontinuous reinforcing fibers present in a range to be measured in the entire bundle is visible over the thickness direction of the bundle assembly of discontinuous reinforcing fibers, and an image of a surface appearing by slicing is photographed. As a method for slicing the bundle assembly in the in-plane direction, an adhesive sheet is applied to the bundle assembly while maintaining the orientation of the bundles of discontinuous reinforcing fibers, and the discontinuous reinforcing fibers in the vicinity of the surface of the bundle assembly are transferred to the adhesive sheet. This transfer surface is an imaging target. This procedure is repeated on the surface of the bundle assembly updated by slicing, that is, the procedure is repeated over the thickness direction of the bundle assembly. Next, the angles of the orientation directions of the bundles of discontinuous reinforcing fibers are measured from the obtained image. The angles of the orientation directions are measured on a computer using image processing software. A histogram is created from the obtained values of the angles of the orientation directions, and classification is performed in four-direction distribution.

The area of the bundle assembly of discontinuous reinforcing fibers to be measured is set to 10,000 mm$^2$ (100 mm × 100 mm). This is because a circular area of 2,000 mm$^2$ or more is required in the thickness measurement of the bundle assembly of discontinuous reinforcing fibers, and on the other hand, an excessively large area is not preferable from the viewpoint of aligning the measurement position for the fiber areal weight and the thickness of the bundle assembly of discontinuous reinforcing fibers.

As a method for producing a bundle assembly of discontinuous reinforcing fibers as described above, there is a method of cutting a continuous fiber bundle having 500 or more and less than 12,000 filaments in the fiber longitudinal direction so that the number average fiber length is within a range of 3 to 100 mm, and substantially randomly orienting the bundles of discontinuous reinforcing fibers.

As another method, there is a method of dividing a continuous fiber bundle having 1,000 or more filaments into a plurality of bundles along the fiber longitudinal direction, then cutting the bundles in the fiber longitudinal direction so that the number average fiber length is within a range of 3 to 100 mm, and substantially randomly orienting the bundles of discontinuous reinforcing fibers, a method of cutting a continuous fiber bundle having 1,000 or more filaments in the fiber longitudinal direction so that the number average fiber length is within a range of 3 to 100 mm, then dividing the continuous fiber bundle into a plurality of discontinuous reinforcing fiber bundles along the fiber longitudinal direction, and substantially randomly orienting the discontinuous reinforcing fiber bundles, or a method combining the two methods.

For example, a continuous fiber bundle having 48,000 filaments is divided into 16 equal bundles each having 3,000 filaments along the fiber longitudinal direction, and then each bundle is cut in the fiber longitudinal direction so that the number average fiber length is 25 mm, and further divided into half by applying an impact to the bundle of discontinuous reinforcing fibers, thereby obtaining a bundle assembly of discontinuous reinforcing fibers having an average number of filaments of 1,500.

The content of the reinforcing fibers in the molding material of the present invention is 30 mass% or less and 90 mass% or less. When the mass fraction of the reinforcing fibers is 30 mass% or more, the resulting fiber-reinforced composite material will not have too large a mass, and the advantages of the fiber-reinforced composite material such as excellent specific strength and excellent specific elastic modulus can be fully exhibited. When the mass fraction of the reinforcing fibers is 90 mass% or less, the epoxy resin composition is excellent in impregnating properties into the reinforcing fibers.

Examples of a molding material obtained using continuous reinforcing fibers include prepregs and tow prepregs.

Examples of a molding material obtained using discontinuous reinforcing fibers include bulk molding compounds (BMCs) and sheet molding compounds (SMCs). Among them, SMCs are particularly preferably used from the viewpoint of producibility and the flexibility in the shape of the molding.

The shape of the molding material of the present invention is preferably a sheet shape.

The areal weight of the molding material is preferably 500 g/m$^2$ or more and 2,500 g/m$^2$ or less. When the areal weight of the molding material is 500 g/m$^2$ or more, the number of layers to be laminated in molding the molding material is reduced, leading to improvement in production efficiency of the fiber-reinforced composite material. When the areal weight is 2,500 g/m$^2$ or less, the epoxy resin composition is excellent in impregnating properties into the reinforcing fibers in the production of the molding material.

The molding material of the present invention is stable in tackiness properties and flowability during press molding even after long-term storage for 30 days or longer, and thus a fiber-reinforced composite material excellent in surface smoothness and mechanical properties can be obtained.

The fiber-reinforced composite material of the present invention is obtained by curing the molding material of the present invention.

In the fiber-reinforced composite material of the present invention, the glass transition temperature of a cured material of the epoxy resin as a matrix resin is preferably 120°C or higher and 250°C or lower. When the glass transition temperature is within this range, heat resistance is excellent. In the fiber-reinforced composite material of the present invention, the bending strain of a cured material of the epoxy resin as a matrix resin is preferably 3.5% or more. When the bending strain is 3.5% or more, mechanical properties are excellent. In particular, in the fields of aircraft and automobiles, the fiber-reinforced composite material is required to have mechanical properties such as high heat resistance and bending strain.

As a method for producing a fiber-reinforced composite material of the present invention, a hand lay-up method, a filament winding method, a pultrusion method, a resin transfer molding (RTM) method, an autoclave molding method of a prepreg, and press forming methods of molding materials for a fiber-reinforced composite material, such as prepregs and tow prepregs, bulk molding compounds (BMCs), and sheet molding compounds (SMCs), are preferably used.

EXAMPLES

Hereinafter, the molding material and the fiber-reinforced composite material of the present invention will be described in more detail with reference to Examples.

<Measurement/evaluation method, and method for producing measurement sample>

(1) Viscosity of epoxy resin composition at 25°C

An epoxy resin composition immediately after preparation was measured, while being maintained at 25°C, according to JIS Z8803 (1991), "Viscosity measurement method using circular cone-flat plate type rotary viscometer" using an E-type viscometer equipped with a standard cone rotor (cone angle: 1°34', cone radius: 24 mm). The E-type viscometer used was TVE-30H manufactured by TOKIMEC INC.

(2) Volatilization amount during thickening of resin composition

A prepared epoxy resin composition (5.0 g) was thinly spread on an aluminum cup so as to have a thickness of 0.2 mm or less, and heated at 40°C for 24 hours. The mass before and after heating was measured with an accuracy of 0.001 g, and the amount of change was divided by the mass of the original epoxy resin composition to calculate the volatilization amount during thickening. The volatilization amount during thickening was an average value of the volatilization amounts obtained from three samples.

(3) Volatilization amount during curing of resin composition

The thickened material (5.0 g) of the epoxy resin composition obtained in the above section (2) was placed on an aluminum cup and heated at 150°C for 30 minutes. The mass before and after heating was measured with an accuracy of 0.001 g, and the amount of change was divided by the mass of the original epoxy resin composition to calculate the volatilization amount of the thickened material. The volatilization amount during thickening was an average value of the volatilization amounts obtained from three samples.

(4) Production of cured material of resin composition

The prepared epoxy resin composition was degassed in vacuum, and then injected into a mold that was set to have a thickness of 2 mm with a 2 mm-thick "Teflon (registered trademark)" spacer. The epoxy resin composition was cured by heating at a temperature of 150°C for 30 minutes to give a cured resin having a thickness of 2 mm.

(5) Volatilization amount of cured material of resin composition

The cured material (2.000 g) produced in the above section (4) was weighed in a 20 mL head space vial, and heated at 120°C for 5 hours. Then, the gas phase portion after heating was analyzed using a gas chromatograph equipped with a flame ionization detector (GC-FID) according to VDA277, and the volatilization amount of the cured material was measured. The volatilization amount of the cured material was represented by the ratio of the measured volatilization amount to the mass of the weighed cured material (unit: $\mu$g/g), and was an average value of the volatilization amounts obtained from three samples.

(6) Bending strain of cured material 30 days after curing

The cured material produced in the above section (4) was stored at 25°C for 30 days. A test piece having a width of 10 mm and a length of 600 mm was cut out from the stored sample, and the maximum bending deflection was measured by conducting the three-point bending test using an Instron type universal tester (manufactured by Instron Corporation) according to JIS K7074:1988. The measurement was performed under the conditions of a crosshead speed of 5 mm/min, a span of 80 mm, an indenter diameter of 5 mm, and a fulcrum diameter of 2 mm. The measured values of the maximum bending deflection of five samples were calculated, and converted into bending strain by the following Formula (4) .

$$\varepsilon = 600 \ hw/L^2 \ldots \quad (4)$$

$\varepsilon$: bending strain (%)
h: test piece thickness (mm)
w: maximum bending deflection (mm)
L: span (mm).

(7) Tackiness 30 days after production date of molding material

A 10 cm $\times$ 10 cm sample was cut out from the molding material. Then, the cut sample was stored at 25°C for 30 days. A release film was peeled off from the sample after storage, at normal temperature, the mass of the peeled release film was measured, and the peeling amount was calculated from the following formula:

$$\text{Peeling amount } (\%) = [(La - L0)/L0] \times 100$$

La: mass of release film after peeling
L0: mass of release film used for production of molding material and having same size as that of release film after peeling.

Evaluation was performed according to the peeling amount based on the following criteria.

A: The peeling amount is less than 3%.
B: The peeling amount is 3% or more and less than 5%.
C: The peeling amount is 5% or more.

(8) Flowability 30 days after production date of molding material

The molding material was stored at 25°C for 30 days. Two samples each having a length of 5 cm and a width of 5 cm were cut out from the molding material after storage, and laminated in two layers to prepare a sample. After measuring the area of the sample, the sample was heated at a mold temperature of 150°C and a pressure of 20 kN for 5 minutes using a press to obtain a fiber-reinforced composite material. The area of the sample after heating was measured, the measured area was divided by the area before press molding, and the obtained value was then multiplied by 100 to calculate the flow rate.
Evaluation was performed according to the flow rate based on the following criteria.

A: The flow rate is 251 to 600%.
B: The flow rate is 111 to 250%.
C: The flow rate is 100 to 110%.

(9) Surface smoothness of fiber-reinforced composite material

The prepared flat fiber-reinforced composite material was stored at 180°C for 2 hours. From the fiber-reinforced composite material after storage, five pieces (10 pieces in total) having a length of 80 mm, a width of 30 mm, and a thickness of 1.6 mm were cut out in each of the 0 degree direction and the 90 degree direction, assuming that the longitudinal direction of the flat plate is the 0 degree direction. The arithmetic average roughness of the surface of each test piece was measured with a surface roughness measuring instrument "SURFCOM" 480A (manufactured by Tokyo Seimitsu Co., Ltd.), and the average value of ten pieces was adopted as Ra. The measurement was performed under the condition of a crosshead speed of 0.3 mm/s.

Evaluation was performed according to Ra based on the following criteria.

A: Ra is 0.25 um or less.
B: Ra is more than 0.25 um and 0.50 um or less.
C: Ra is more than 0.50 um.

<Resin raw materials>

The following resin raw materials were used to obtain the epoxy resin compositions of Examples and Comparative Examples. The numerical value of each component in the column of "Epoxy resin composition" in the tables indicates the content, and the unit ("parts") is "parts by mass" unless otherwise specified. In the table, the compound name, and the trade name and product number (for example, "jER806") or only the product number (for example, "YDF170") are listed.

(1) Component (A): bisphenol type epoxy resin having number average molecular weight of 250 or more and 365 or less

- "Epotohto (registered trademark)" YDF170 (manufactured by Nippon Steel & Sumikin Chemical Co., Ltd.): liquid bisphenol F type epoxy resin (number average molecular weight: 340)
- "jER (registered trademark)" 806 (manufactured by Mitsubishi Chemical Corporation): liquid bisphenol F type epoxy resin (number average molecular weight: 330)
- "jER (registered trademark)" 825 (manufactured by Mitsubishi Chemical Corporation): liquid bisphenol A type epoxy resin (number average molecular weight: 364).

(2) Component (B): latent curing agent

- "jERcure (registered trademark)" DICY7 (manufactured by Mitsubishi Chemical Corporation): dicyandiamide
- "CUREZOL (registered trademark)" 2MZA-PW (manufactured by Shikoku Chemicals Corporation): 2,4-diamino-6-[2'-methylimidazolyl-(1')-ethyl]-triazine.

(3) Component (C): acid anhydride and/or isocyanate compound

- HN-2200 (manufactured by Hitachi Chemical Co., Ltd.): methyltetrahydrophthalic anhydride
- "Lupranate (registered trademark)" M20S (manufactured by BASF INOAC Polyurethanes Ltd.): polymeric MDI (polymethylene polyphenyl polyisocyanate)
- "Lupranate (registered trademark)" MM-103 (manufactured by BASF INOAC Polyurethanes Ltd.): carbodiimide-modified MDI
- "Desmodur (registered trademark)" I (manufactured by Sumika Covestro Urethane Co., Ltd.): isophorone diisocyanate.

(4) Component (D): bisphenol type epoxy resin having number average molecular weight of 366 or more and 1,000 or less

- "Epotohto (registered trademark)" YD128 (manufactured by Nippon Steel & Sumikin Chemical Co., Ltd.): liquid bisphenol A type epoxy resin (number average molecular weight: 378)
- "jER (registered trademark)" 1001 (manufactured by Mitsubishi Chemical Corporation): solid bisphenol A type epoxy resin (number average molecular weight: 950).

(5) Component (E): compound containing carboxy group

- Stearic acid (manufactured by Tokyo Chemical Industry Co., Ltd.): stearic acid
- 4-Methyl-1,2,3,6-tetrahydrophthalic acid: a compound obtained by adding, to acid anhydride of HN-2200 (manufactured by Hitachi Chemical Co., Ltd.), water having the same number of moles as the number of moles of the acid anhydride, and heating the mixture at 80°C for 1 hour.

(6) Component (F): glycidylamine type epoxy resin

- TETRAD-X (manufactured by Mitsubishi Gas Chemical Company, Inc.): xylylenediamine type epoxy resin
- "ARALDITE (registered trademark)" MY0500 (manufactured by Huntsman Advanced Materials): aminophenol type epoxy resin.

(7) Other components

- QSR-10 (manufactured by Shin-Etsu Chemical Co., Ltd.) silica particles (average particle size: 15 nm).

[Examples 1 to 33]

(Preparation of epoxy resin composition)

Epoxy resin compositions were prepared by mixing the components at the mass ratios shown in Tables 1 to 3. When the molecular weight distribution of the epoxy resins mixed in the following Examples and Comparative Examples was confirmed, no overlap between skirt portions of different components (peaks) was observed. The viscosity at 25°C was 3.0 Pa-s or less, which was favorable, in all cases. In addition, the volatilization amount during thickening was 5 mass% or less in all cases. The volatilization amount during curing was 5 mass% or less in all cases. The volatilization amount of the cured material was 100 μg/g or less, and the bending strain of the cured material 30 days after curing was 3.5% or more in all cases.

(Production of bundle assembly of discontinuous reinforcing fibers)

"TORAYCA (registered trademark)" T700S-12K (manufactured by Toray Industries, Inc.) was used as carbon fibers. A continuous fiber bundle of the carbon fibers having 12,000 filaments was subjected to a widening treatment so as to have a width of 20 mm. Then, the fiber bundle was divided into four equal bundles in the width direction by a fiber dividing treatment means set in parallel at equal intervals of 5 mm to obtain a continuous carbon fiber strand.
A 50 bobbin, around which the continuous carbon fiber strand was wound, was set on a creel. The strand was unwound from the end of the fiber bundle on the outer side of the bobbin, and continuously inserted into a rotary strand cutter set at a right angle to the longitudinal direction of the fiber bundle and at intervals of 25 mm. The fiber bundle was cut and scattered so as to be uniformly dispersed, thereby obtaining a bundle assembly of discontinuous reinforcing fibers having isotropic fiber orientation. The obtained bundle assembly of discontinuous reinforcing fibers had a bulkiness of 3.0 cm$^3$/g.

(Production of molding material)

The epoxy resin composition was applied onto a release film (crocodile mark polysheet, transparent #150, (manufactured by Nichidai Industry Co., Ltd.)) so as to have the content and the areal weight of the reinforcing fibers described in Tables 1 to 3, the bundle assembly of discontinuous reinforcing fibers was sandwiched therebetween, and the bundle assembly was impregnated with the epoxy resin composition by a roller to produce a molding material.
The tackiness and the flow rate 30 days after the production date were both B or more in all cases.

(Production of fiber-reinforced composite material)

Two sheets of the molding material produced above were stacked, and heated at 150°C for 10 minutes under a pressure of 10 MPa by a pressure press to obtain a flat fiber-reinforced composite material having a length of 300 mm, a width of 400 mm, and a thickness of 1.6 mm.
The surface smoothness of the obtained fiber-reinforced composite material after high temperature treatment was B or more in all cases.

[Example 34]

(Preparation of epoxy resin composition)

An epoxy resin composition was prepared by mixing the components at the mass ratios shown in Table 3. The viscosity at 25°C was 3.0 Pa-s or less, which was favorable. The volatilization amount during thickening was 5 mass% or less. The volatilization amount during curing was 5 mass% or less. The volatilization amount of the cured material

was 100 μg/g or less, and the bending strain of the cured material 30 days after curing was 3.5% or more.

(Production of bundle assembly of discontinuous reinforcing fibers)

A bundle assembly of discontinuous reinforcing fibers having isotropic fiber orientation was obtained in the same manner as in Example 1 except that the continuous fiber bundle of carbon fibers was divided into two equal bundles in the width direction by a fiber dividing treatment means set in parallel at equal intervals of 10 mm. The obtained discontinuous reinforcing fibers had a bulkiness of 2.0 cm$^3$/g.

(Production of molding material)

The epoxy resin composition was applied onto a release film (crocodile mark polysheet, transparent #150, (manufactured by Nichidai Industry Co., Ltd.)) so as to have the content and the areal weight of the reinforcing fibers described in Table 3, the bundle assembly of discontinuous reinforcing fibers was sandwiched therebetween, and the bundle assembly was impregnated with the epoxy resin composition by a roller to produce a molding material.
The tackiness and the flow rate 30 days after the production date were both B or more.

(Production of fiber-reinforced composite material)

A flat fiber-reinforced composite material having a length of 300 mm, a width of 400 mm, and a thickness of 1.6 mm was obtained in the same manner as in Example 1 except that the above molding material was used.
The surface smoothness of the obtained fiber-reinforced composite material after high temperature treatment was B or more.

[Example 35]

(Preparation of epoxy resin composition)

An epoxy resin composition was prepared by mixing the components at the mass ratios shown in Table 3. The properties of the obtained epoxy resin composition are the same as those of Example 34.

(Production of bundle assembly of discontinuous reinforcing fibers)

A bundle assembly of discontinuous reinforcing fibers having isotropic fiber orientation was obtained in the same manner as in Example 1 except that a strand cutter at intervals of 3.3 mm was used as a means for cutting the divided fiber bundle, and the cutting speed was 1.5 times. The obtained discontinuous reinforcing fibers had a bulkiness of 4.0 cm$^3$/g.

(Production of molding material)

The epoxy resin composition was applied onto a release film (crocodile mark polysheet, transparent #150, (manufactured by Nichidai Industry Co., Ltd.)) so as to have the content and the areal weight of the reinforcing fibers described in Table 3, the bundle assembly of discontinuous reinforcing fibers was sandwiched therebetween, and the bundle assembly was impregnated with the epoxy resin composition by a roller to produce a molding material.
The tackiness and the flow rate 30 days after the production date were both B or more.

(Production of fiber-reinforced composite material)

A flat fiber-reinforced composite material having a length of 300 mm, a width of 400 mm, and a thickness of 1.6 mm was obtained in the same manner as in Example 1 except that the above molding material was used.
The surface smoothness of the obtained fiber-reinforced composite material after high temperature treatment was B or more.

[Table 1-1]

| Epoxy resin composition | | | | Example 1 | Example 2 | Example 3 | Example 4 | Example 5 | Example 6 |
|---|---|---|---|---|---|---|---|---|---|
| | Component (A) | | YDF170 | 100 | - | - | 100 | 100 | 100 |
| | | | jER806 | - | 100 | - | - | - | - |
| | | | JER825 | - | - | 100 | - | - | - |
| | Component (B) | | DICY7 | 14 | 14 | 14 | 14 | 14 | 14 |
| | | | 2MZA-PW | - | - | - | - | - | - |
| | Component (C) | Acid anhydride | HN-2200 | 20 | 20 | 20 | - | - | - |
| | | Isocyanate | M20S | - | - | - | 20 | - | - |
| | | | MM-103 | - | - | - | - | 20 | - |
| | | | "Desmodur" I | - | - | - | - | - | 20 |
| | Component (D) | | YD128 | - | - | - | - | - | - |
| | | | jER1001 | - | - | - | - | - | - |
| | Component (E) | | Stearic acid | - | - | - | - | - | - |
| | | | 4-Methyl-1,2,3,6-tetrahydrophthalic acid | - | - | - | - | - | - |
| | Component (F) | | TETRAD-X | - | - | - | - | - | - |
| | | | MY0500 | - | - | - | - | - | - |
| | Other components | | QSR-10 | - | - | - | - | - | - |
| Content of reinforcing fibers [%] | | | | 50 | 50 | 50 | 50 | 50 | 50 |
| Bulkiness Bm of bundle assembly of discontinuous reinforcing fibers | | | | 3.0 | 3.0 | 3.0 | 3.0 | 3.0 | 3.0 |
| Content of component (A) in epoxy resin composition [%] | | | | 75 | 75 | 75 | 75 | 75 | 75 |
| Content of component (B) in epoxy resin composition [%] | | | | 10 | 10 | 10 | 10 | 10 | 10 |
| Wc/Wb | | | | 0.18 | 0.18 | 0.18 | 0.22 | 0.21 | 0.27 |
| (Me/Mc) $\times$ 100 | | | | - | - | - | - | - | - |
| Areal weight of molding material for fiber-reinforced composite material [g/m$^2$] | | | | 2000 | 2000 | 2000 | 2000 | 2000 | 2000 |

(continued)

| | | Example 1 | Example 2 | Example 3 | Example 4 | Example 5 | Example 6 |
|---|---|---|---|---|---|---|---|
| | Volatilization amount of resin composition during thickening [mass%] | 0.52 | 0.41 | 0.53 | 0.64 | 0.77 | 0.74 |
| | Volatilization amount of resin composition during curing [mass%] | 0.21 | 0.22 | 0.24 | 0.33 | 0.57 | 0.83 |
| | Volatilization amount of cured material of resin composition [pg/g] | 86 | 82 | 75 | 75 | 77 | 78 |
| Resin properties | Viscosity at 25°C [Pa·s] | 0.8 | 0.7 | 1.3 | 0.8 | 0.7 | 0.6 |
| | Bending strain of cured material 30 days after curing [%] | 3.9 | 3.8 | 3.9 | 4.5 | 5.3 | 5.7 |
| Properties of molding material for fiber-reinforced composite material | Tackiness 30 days after production date | B | B | B | B | B | B |
| | Flowability 30 days after production date | B | B | B | A | A | A |
| Properties of fiber-reinforced composite material | Surface smoothness after high temperature treatment | B | B | B | B | B | B |

[Table 1-2]

| Epoxy resin composition | | | | Example 7 | Example 8 | Example 9 | Example 10 | Example 11 | Example 12 |
|---|---|---|---|---|---|---|---|---|---|
| | Component (A) | | YDF170 | 100 | 100 | 100 | 80 | 50 | 30 |
| | | | jER806 | - | - | - | - | - | - |
| | | | JER825 | - | - | - | - | - | - |
| | Component (B) | | DICY7 | 14 | 14 | 14 | 10 | 10 | 10 |
| | | | 2MZA-PW | - | - | - | - | - | - |
| | Component (C) | Acid anhydride | HN-2200 | - | - | 15 | 15 | 15 | 15 |
| | | Isocyanate | M20S | 30 | 40 | - | - | - | - |
| | | | MM-103 | - | - | - | - | - | - |
| | | | "Desmodur" I | - | - | - | - | - | - |
| | Component (D) | | YD128 | - | - | - | 20 | 50 | 70 |
| | | | jER1001 | - | - | - | - | - | - |
| | Component (E) | | Stearic acid | - | - | - | - | - | - |
| | | | 4-Methyl-1,2,3,6-tetrahydrophthalic acid | - | - | - | - | - | - |
| | Component (F) | | TETRAD-X | - | - | - | - | - | - |
| | | | MY0500 | - | - | - | - | - | - |
| | Other components | | QSR-10 | - | - | 5 | - | - | - |
| Content of reinforcing fibers [%] | | | | 50 | 50 | 50 | 50 | 50 | 50 |
| Bulkiness Bm of bundle assembly of discontinuous reinforcing fibers | | | | 3.0 | 3.0 | 3.0 | 3.0 | 3.0 | 3.0 |
| Content of component (A) in epoxy resin composition [%] | | | | 69 | 65 | 75 | 64 | 40 | 24 |
| Content of component (B) in epoxy resin composition [%] | | | | 10 | 9 | 10 | 8 | 8 | 8 |
| Wc/Wb | | | | 0.33 | 0.44 | 0.14 | 0.19 | 0.19 | 0.19 |
| (Me/Mc) × 100 | | | | - | - | - | - | - | - |
| Areal weight of molding material for fiber-reinforced composite material [g/m$^2$] | | | | 2000 | 2000 | 2000 | 2000 | 2000 | 2000 |

(continued)

| | | Example 7 | Example 8 | Example 9 | Example 10 | Example 11 | Example 12 |
|---|---|---|---|---|---|---|---|
| Volatilization amount of resin composition during thickening [mass%] | | 0.72 | 0.77 | 0.46 | 0.37 | 0.43 | 0.55 |
| Volatilization amount of resin composition during curing [mass%] | | 0.37 | 0.42 | 0.15 | 0.32 | 0.42 | 0.58 |
| Volatilization amount of cured material of resin composition [pg/g] | | 62 | 60 | 43 | 47 | 42 | 40 |
| Resin properties | Viscosity at 25°C [Pa·s] | 0.6 | 0.5 | 2.8 | 1.2 | 2.0 | 2.9 |
| | Bending strain of cured material 30 days after curing [%] | 4.7 | 4.8 | 3.7 | 5.7 | 5.8 | 6.0 |
| Properties of molding material for fiber-reinforced composite material | Tackiness 30 days after production date | B | B | B | B | B | B |
| | Flowability 30 days after production date | A | A | B | B | B | B |
| Properties of fiber-reinforced composite material | Surface smoothness after high temperature treatment | B | B | B | B | B | B |

[Table 2-1]

| | | | | Example 13 | Example 14 | Example 15 | Example 16 | Example 17 | Example 18 |
|---|---|---|---|---|---|---|---|---|---|
| Epoxy resin composition | Component (A) | | YDF170 | 80 | 97 | 80 | 80 | 80 | 80 |
| | | | jER806 | - | - | - | - | - | - |
| | | | JER825 | - | - | - | - | - | - |
| | Component (B) | | DICY7 | 10 | 10 | 10 | 10 | 10 | 10 |
| | | | 2MZA-PW | - | - | - | - | - | - |
| | Component (C) | Acid anhydride | HN-2200 | - | - | 15 | 15 | 15 | 15 |
| | | | M20S | 25 | 25 | - | - | - | - |
| | | | MM-103 | - | - | - | - | - | - |
| | | Isocyanate | "Desmodur" I | - | - | - | - | - | - |
| | Component (D) | | YD128 | 20 | - | 20 | 20 | 20 | 20 |
| | | | jER1001 | - | 3 | - | - | - | - |
| | Component (E) | | Stearic acid | - | - | 1 | 5 | - | - |
| | | | 4-Methyl-1,2,3,6-tetrahydrophthalic acid | - | - | - | - | 3 | 7 |
| | Component (F) | | TETRAD-X | - | - | - | - | - | - |
| | | | MY0500 | - | - | - | - | - | - |
| | | | QSR-10 | - | - | - | - | - | - |
| | Other components | | | - | - | - | - | - | - |
| Content of reinforcing fibers [%] | | | | 50 | 50 | 50 | 50 | 50 | 50 |
| Bulkiness Bm of bundle assembly of discontinuous reinforcing fibers | | | | 3.0 | 3.0 | 3.0 | 3.0 | 3.0 | 3.0 |
| Content of component (A) in epoxy resin composition [%] | | | | 59 | 72 | 63 | 62 | 63 | 61 |
| Content of component (B) in epoxy resin composition [%] | | | | 7 | 7 | 8 | 8 | 8 | 8 |
| Wc/Wb | | | | 0.39 | 0.39 | 0.19 | 0.19 | 0.19 | 0.19 |
| (Me/Mc) × 100 | | | | - | - | 4 | 19 | 18 | 42 |
| Areal weight of molding material for fiber-reinforced composite material [g/m$^2$] | | | | 2000 | 2000 | 2000 | 2000 | 2000 | 2000 |

(continued)

| | | Example 13 | Example 14 | Example 15 | Example 16 | Example 17 | Example 18 |
|---|---|---|---|---|---|---|---|
| Volatilization amount of resin composition during thickening [mass%] | | 0.56 | 0.43 | 0.06 | 0.09 | 0.14 | 0.11 |
| Volatilization amount of resin composition during curing [mass%] | | 0.34 | 0.29 | 0.22 | 0.20 | 0.21 | 0.18 |
| Volatilization amount of cured material of resin composition [pg/g] | | 45 | 41 | 24 | 20 | 32 | 12 |
| Resin properties | Viscosity at 25°C [Pa·s] | 0.8 | 1.3 | 1.2 | 1.5 | 1.2 | 1.6 |
| | Bending strain of cured material 30 days after curing [%] | 6.5 | 6.8 | 6.3 | 6.8 | 6.2 | 6.5 |
| Properties of molding material for fiber-reinforced composite material | Tackiness 30 days after production date | B | B | A | A | A | A |
| | Flowability 30 days after production date | A | A | B | B | B | B |
| Properties of fiber-reinforced composite material | Surface smoothness after high temperature treatment | B | B | A | A | A | A |

[Table 2-2]

| Epoxy resin composition | | | | Example 19 | Example 20 | Example 21 | Example 22 | Example 23 |
|---|---|---|---|---|---|---|---|---|
| | Component (A) | | YDF170 | 80 | 80 | 60 | 70 | 80 |
| | | | jER806 | - | - | - | - | - |
| | | | JER825 | - | - | - | - | - |
| | Component (B) | | DICY7 | 10 | 10 | 10 | 10 | 10 |
| | | | 2MZA-PW | - | - | - | - | - |
| | Component (C) | Acid anhydride | HN-2200 | 15 | - | - | - | 15 |
| | | Isocyanate | M20S | - | 25 | 25 | 25 | - |
| | | | MM-103 | - | - | - | - | - |
| | | | "Desmodur" I | - | - | - | - | - |
| | Component (D) | | YD128 | 20 | 15 | 10 | 15 | 12 |
| | | | jER1001 | - | - | - | - | - |
| | Component (E) | | Stearic acid | - | - | - | - | - |
| | | | 4-Methyl-1,2,3,6-tetrahydrophthalic acid | 14 | - | - | - | - |
| | Component (F) | | TETRAD-X | - | 8 | - | 15 | 8 |
| | | | MY0500 | - | - | 20 | - | - |
| | Other components | | QSR-10 | - | - | - | - | - |
| Content of reinforcing fibers [%] | | | | 50 | 50 | 50 | 50 | 50 |
| Bulkiness Bm of bundle assembly of discontinuous reinforcing fibers | | | | 3.0 | 3.0 | 3.0 | 3.0 | 3.0 |
| Content of component (A) in epoxy resin composition [%] | | | | 58 | 58 | 48 | 52 | 64 |
| Content of component (B) in epoxy resin composition [%] | | | | 7 | 7 | 8 | 7 | 8 |
| Wc/Wb | | | | 0.19 | 0.39 | 0.39 | 0.39 | 0.19 |
| (Me/Mc) $\times$ 100 | | | | 84 | - | - | - | - |
| Areal weight of molding material for fiber-reinforced composite material [g/m$^2$] | | | | 2000 | 2000 | 2000 | 2000 | 2000 |

(continued)

| | | Example 19 | Example 20 | Example 21 | Example 22 | Example 23 |
|---|---|---|---|---|---|---|
| Volatilization amount of resin composition during thickening [mass%] | | 0.22 | 0.46 | 0.46 | 0.45 | 0.52 |
| Volatilization amount of resin composition during curing [mass%] | | 0.12 | 0.24 | 3.42 | 0.28 | 0.32 |
| Volatilization amount of cured material of resin composition [pg/g] | | 11 | 26 | 29 | 21 | 42 |
| Resin properties | Viscosity at 25°C [Pa·s] | 1.8 | 1.4 | 1.4 | 1.4 | 1.4 |
| | Bending strain of cured material 30 days after curing [%] | 5.2 | 5.3 | 4.8 | 5.2 | 5.0 |
| Properties of molding material for fiber-reinforced composite material | Tackiness 30 days after production date | A | B | B | B | B |
| | Flowability 30 days after production date | B | A | A | A | B |
| Properties of fiber-reinforced composite material | Surface smoothness after high temperature treatment | A | A | A | A | A |

[Table 3-1]

| Epoxy resin composition | | | | Example 24 | Example 25 | Example 26 | Example 27 | Example 28 | Example 29 |
|---|---|---|---|---|---|---|---|---|---|
| | Component (A) | | YDF170 | 80 | 80 | 80 | 80 | 80 | 80 |
| | | | jER806 | - | - | - | - | - | - |
| | | | JER825 | - | - | - | - | - | - |
| | Component (B) | | DICY7 | 2 | 2 | 1 | 10 | 10 | 10 |
| | | | 2MZA-PW | 5 | 5 | 3 | - | - | - |
| | Component (C) | Acid anhydride | HN-2200 | 15 | - | - | - | - | - |
| | | Isocyanate | M20S | - | 25 | 25 | 25 | 25 | 25 |
| | | | MM-103 | - | - | - | - | - | - |
| | | | "Desmodur" I | - | - | - | - | - | - |
| | Component (D) | | YD128 | 12 | 12 | 12 | 12 | 12 | 12 |
| | | | jER1001 | - | - | - | - | - | - |
| | Component (E) | | Stearic acid | 1 | 1 | 1 | 1 | 1 | 1 |
| | | | 4-Methyl-1,2,3,6-tetrahydrophthalic acid | - | - | - | - | - | - |
| | Component (F) | | TETRAD-X | 8 | 8 | 8 | 8 | 8 | 8 |
| | | | MY0500 | - | - | - | - | - | - |
| | Other components | | QSR-10 | - | - | - | - | - | - |
| Content of reinforcing fibers [%] | | | | 50 | 50 | 50 | 30 | 70 | 90 |
| Bulkiness Bm of bundle assembly of discontinuous reinforcing fibers | | | | 3.0 | 3.0 | 3.0 | 3.0 | 3.0 | 3.0 |
| Content of component (A) in epoxy resin composition [%] | | | | 65 | 60 | 62 | 59 | 59 | 59 |
| Content of component (B) in epoxy resin composition [%] | | | | 6 | 5 | 3 | 7 | 7 | 7 |
| Wc/Wb | | | | 0.48 | 0.99 | 1.80 | 0.39 | 0.39 | 0.39 |
| (Me/Mc) × 100 | | | | 4 | 4 | 4 | 4 | 4 | 4 |
| Areal weight of molding material for fiber-reinforced composite material [g/m$^2$] | | | | 2000 | 2000 | 2000 | 2000 | 2000 | 2000 |

(continued)

|  | | Example 24 | Example 25 | Example 26 | Example 27 | Example 28 | Example 29 |
|---|---|---|---|---|---|---|---|
| Volatilization amount of resin composition during thickening [mass%] | | 0.08 | 0.09 | 0.36 | 0.23 | 0.23 | 0.23 |
| Volatilization amount of resin composition during curing [mass%] | | 0.08 | 0.09 | 0.44 | 0.13 | 0.13 | 0.13 |
| Volatilization amount of cured material of resin composition [pg/g] | | 12 | 16 | 26 | 23 | 23 | 23 |
| Resin properties | Viscosity at 25°C [Pa·s] | 1.0 | 0.7 | 0.5 | 0.7 | 0.7 | 0.7 |
| | Bending strain of cured material 30 days after curing [%] | 3.6 | 3.9 | 3.9 | 6.2 | 6.2 | 6.2 |
| Properties of molding material for fiber-reinforced composite material | Tackiness 30 days after production date | B | A | A | B | A | A |
| | Flowability 30 days after production date | A | A | B | B | A | A |
| Properties of fiber-reinforced composite material | Surface smoothness after high temperature treatment | A | A | A | A | A | A |

[Table 3-2]

| Epoxy resin composition | | | | Example 30 | Example 31 | Example 32 | Example 33 | Example 34 | Example 35 |
|---|---|---|---|---|---|---|---|---|---|
| | Component (A) | | YDF170 | 80 | 80 | 80 | 80 | 80 | 80 |
| | | | jER806 | - | - | - | - | - | - |
| | | | JER825 | - | - | - | - | - | - |
| | Component (B) | | DICY7 | 10 | 10 | 10 | 10 | 10 | 10 |
| | | | 2MZA-PW | - | - | - | - | - | - |
| | Component (C) | Acid anhydride | HN-2200 | 5 | - | - | - | - | - |
| | | Isocyanate | M20S | 5 | 25 | 25 | 25 | 25 | 25 |
| | | | MM-103 | - | - | - | - | - | - |
| | | | "Desmodur" I | - | - | - | - | - | - |
| | Component (D) | | YD128 | 12 | 12 | 12 | 12 | 12 | 12 |
| | | | jER1001 | - | - | - | - | - | - |
| | Component (E) | | Stearic acid | 1 | 1 | 1 | 1 | 1 | 1 |
| | | | 4-Methyl-1,2,3,6-tetrahydrophthalic acid | - | - | - | - | - | - |
| | Component (F) | | TETRAD-X | 8 | 8 | 8 | 8 | 8 | 8 |
| | | | MY0500 | - | - | - | - | - | - |
| | Other components | | QSR-10 | - | - | - | - | - | - |
| Content of reinforcing fibers [%] | | | | 50 | 50 | 50 | 50 | 50 | 50 |
| Bulkiness Bm of bundle assembly of discontinuous reinforcing fibers | | | | 3.0 | 3.0 | 3.0 | 3.0 | 2.0 | 4.0 |
| Content of component (A) in epoxy resin composition [%] | | | | 66 | 59 | 59 | 59 | 59 | 59 |
| Content of component (B) in epoxy resin composition [%] | | | | 8 | 7 | 7 | 7 | 7 | 7 |
| Wc/Wb | | | | 0.14 | 0.39 | 0.39 | 0.39 | 0.39 | 0.39 |
| (Me/Mc) × 100 | | | | 4 | 4 | 4 | 4 | 4 | 4 |
| Areal weight of molding material for fiber-reinforced composite material [g/m$^2$] | | | | 2000 | 500 | 1500 | 2500 | 2000 | 2000 |

(continued)

| | | Example 30 | Example 31 | Example 32 | Example 33 | Example 34 | Example 35 |
|---|---|---|---|---|---|---|---|
| Volatilization amount of resin composition during thickening [mass%] | | 0.17 | 0.23 | 0.23 | 0.23 | 0.23 | 0.23 |
| Volatilization amount of resin composition during curing [mass%] | | 0.07 | 0.13 | 0.13 | 0.13 | 0.13 | 0.13 |
| Volatilization amount of cured material of resin composition [pg/g] | | 8 | 23 | 23 | 23 | 23 | 23 |
| Resin properties | Viscosity at 25°C [Pa·s] | 1.0 | 0.7 | 0.7 | 0.7 | 0.7 | 0.7 |
| | Bending strain of cured material 30 days after curing [%] | 6.0 | 6.2 | 6.2 | 6.2 | 6.2 | 6.2 |
| Properties of molding material for fiber-reinforced composite material | Tackiness 30 days after production date | A | B | A | A | A | A |
| | Flowability 30 days after production date | A | B | A | A | A | A |
| Properties of fiber-reinforced composite material | Surface smoothness after high temperature treatment | A | A | A | A | A | A |

[Comparative Example 1]

(Preparation of epoxy resin composition)

An epoxy resin composition was prepared by mixing the components at the mass ratios shown in Table 4. The viscosity at 25°C was 1.5 Pa-s, which was favorable. The volatilization amount during thickening was 5 mass% or less. The volatilization amount during curing was 5 mass% or less. The volatilization amount of the cured material was 108 $\mu$g/g, which was poor, and the bending strain of the cured material 30 days after curing was 2.7%, which was poor.

(Production of bundle assembly of discontinuous reinforcing fibers)

A bundle assembly of discontinuous reinforcing fibers having isotropic fiber orientation was obtained in the same manner as in Example 1.

(Production of molding material)

The epoxy resin composition was applied onto a release film (crocodile mark polysheet, transparent #150, (manufactured by Nichidai Industry Co., Ltd.)) so as to have the content and the areal weight of the reinforcing fibers described in Table 4, the bundle assembly of discontinuous reinforcing fibers was sandwiched therebetween, and the bundle assembly was impregnated with the epoxy resin composition by a roller to produce a molding material.
The tackiness and the flow rate 30 days after the production date were both C.

(Production of fiber-reinforced composite material)

A flat fiber-reinforced composite material having a length of 300 mm, a width of 400 mm, and a thickness of 1.6 mm was obtained in the same manner as in Example 1 except that the above molding material was used.
The surface smoothness of the obtained fiber-reinforced composite material after high temperature treatment was C.

[Comparative Example 2]

(Preparation of epoxy resin composition)

An epoxy resin composition was prepared by mixing the components at the mass ratios shown in Table 4. The viscosity at 25°C was 4.2 Pa-s, which was poor. The volatilization amount during thickening was 5 mass% or less. The volatilization amount during curing was 5 mass% or less. The volatilization amount of the cured material was 100 $\mu$g/g or less, and the bending strain of the cured material 30 days after curing was 3.8%, which was favorable.

(Production of bundle assembly of discontinuous reinforcing fibers)

A bundle assembly of discontinuous reinforcing fibers having isotropic fiber orientation was obtained in the same manner as in Example 1.

(Production of molding material)

The epoxy resin composition was applied onto a release film (crocodile mark polysheet, transparent #150, (manufactured by Nichidai Industry Co., Ltd.)) so as to have the content and the areal weight of the reinforcing fibers described in Table 4, the bundle assembly of discontinuous reinforcing fibers was sandwiched therebetween, and the bundle assembly was impregnated with the epoxy resin composition by a roller to produce a molding material.
The tackiness and the flow rate 30 days after the production date were both C, which was poor.

(Production of fiber-reinforced composite material)

A flat fiber-reinforced composite material having a length of 300 mm, a width of 400 mm, and a thickness of 1.6 mm was obtained in the same manner as in Example 1 except that the above molding material was used.
The surface smoothness of the obtained fiber-reinforced composite material after high temperature treatment was C.

[Comparative Example 3]

(Preparation of epoxy resin composition)

An epoxy resin composition was prepared by mixing the components at the mass ratios shown in Table 4. The viscosity at 25°C was 0.8 Pa-s, which was favorable. The volatilization amount during thickening was 5 mass% or less. The volatilization amount during curing was 5 mass% or less. The volatilization amount of the cured material was 100 $\mu$g/g or less, and the bending strain of the cured material 30 days after curing was 3.9%, which was favorable.

(Production of bundle assembly of discontinuous reinforcing fibers)

A bundle assembly of discontinuous reinforcing fibers having isotropic fiber orientation was obtained in the same manner as in Example 1.

(Production of molding material)

The epoxy resin composition was applied onto a release film (crocodile mark polysheet, transparent #150, (manufactured by Nichidai Industry Co., Ltd.)) so as to have the content and the areal weight of the reinforcing fibers described in Table 4, the bundle assembly of discontinuous reinforcing fibers was sandwiched therebetween, and the bundle assembly was impregnated with the epoxy resin composition by a roller to produce a molding material.
The tackiness and the flow rate 30 days after the production date were both C, which was poor.

(Production of fiber-reinforced composite material)

A flat fiber-reinforced composite material having a length of 300 mm, a width of 400 mm, and a thickness of 1.6 mm was obtained in the same manner as in Example 1 except that the above molding material was used.
The surface smoothness of the obtained fiber-reinforced composite material after high temperature treatment was C.

[Comparative Example 4]

(Preparation of epoxy resin composition)

An epoxy resin composition was prepared by mixing the components at the mass ratios shown in Table 4. The viscosity at 25°C was 0.8 Pa-s, which was favorable. The volatilization amount during thickening was 5 mass% or less. The volatilization amount during curing was 5 mass% or less. The volatilization amount of the cured material was 100 $\mu$g/g or less, and the bending strain of the cured material 30 days after curing was 3.9%, which was favorable.

(Production of bundle assembly of discontinuous reinforcing fibers)

A bundle assembly of discontinuous reinforcing fibers having isotropic fiber orientation was obtained in the same manner as in Example 1.

(Production of molding material)

The epoxy resin composition was applied onto a release film (crocodile mark polysheet, transparent #150, (manufactured by Nichidai Industry Co., Ltd.)) so as to have the content and the areal weight of the reinforcing fibers described in Table 4, the bundle assembly of discontinuous reinforcing fibers was sandwiched therebetween, and the bundle assembly was impregnated with the epoxy resin composition by a roller to produce a molding material.
The tackiness and the flow rate 30 days after the production date were both C, which was poor.

(Production of fiber-reinforced composite material)

A flat fiber-reinforced composite material having a length of 300 mm, a width of 400 mm, and a thickness of 1.6 mm was obtained in the same manner as in Example 1 except that the above molding material was used.
The surface smoothness of the obtained fiber-reinforced composite material after high temperature treatment was C.

[Comparative Example 5]

(Preparation of epoxy resin composition)

An epoxy resin composition was prepared by mixing the components at the mass ratios shown in Table 4. The viscosity at 25°C was 5.2 Pa-s, which was poor. The volatilization amount during thickening was 5 mass% or less. The volatilization amount during curing was 5 mass% or less. The volatilization amount of the cured material was 100 $\mu$g/g or less, and the bending strain of the cured material 30 days after curing was 5.3%, which was favorable.

(Production of bundle assembly of discontinuous reinforcing fibers)

A bundle assembly of discontinuous reinforcing fibers having isotropic fiber orientation was obtained in the same manner as in Example 1.

(Production of molding material)

The epoxy resin composition was applied onto a release film (crocodile mark polysheet, transparent #150, (manufactured by Nichidai Industry Co., Ltd.)) so as to have the content and the areal weight of the reinforcing fibers described in Table 4, the bundle assembly of discontinuous reinforcing fibers was sandwiched therebetween, and the bundle assembly was impregnated with the epoxy resin composition by a roller to produce a molding material.
The tackiness and the flow rate 30 days after the production date were both C, which was poor.

(Production of fiber-reinforced composite material)

A flat fiber-reinforced composite material having a length of 300 mm, a width of 400 mm, and a thickness of 1.6 mm was obtained in the same manner as in Example 1 except that the above molding material was used.
The surface smoothness of the obtained fiber-reinforced composite material after high temperature treatment was C.

[Comparative Example 6]

(Preparation of epoxy resin composition)

An epoxy resin composition was prepared by mixing the components at the mass ratios shown in Table 4. The viscosity at 25°C was 3.2 Pa-s, which was poor. The volatilization amount during thickening was 5 mass% or less. The volatilization amount during curing was 5 mass% or less. The volatilization amount of the cured material was 130 $\mu$g/g, which was poor, and the bending strain of the cured material 30 days after curing was 2.4%, which was poor.

(Production of bundle assembly of discontinuous reinforcing fibers)

A bundle assembly of discontinuous reinforcing fibers having isotropic fiber orientation was obtained in the same manner as in Example 1.

(Production of molding material)

The epoxy resin composition was applied onto a release film (crocodile mark polysheet, transparent #150, (manufactured by Nichidai Industry Co., Ltd.)) so as to have the content and the areal weight of the reinforcing fibers described in Table 4, the bundle assembly of discontinuous reinforcing fibers was sandwiched therebetween, and the bundle assembly was impregnated with the epoxy resin composition by a roller to produce a molding material.
The tackiness and the flow rate 30 days after the production date were both C, which was poor.

(Production of fiber-reinforced composite material)

A flat fiber-reinforced composite material having a length of 300 mm, a width of 400 mm, and a thickness of 1.6 mm was obtained in the same manner as in Example 1 except that the above molding material was used.
The surface smoothness of the obtained fiber-reinforced composite material after high temperature treatment was C.

[Comparative Example 7]

(Preparation of epoxy resin composition)

An epoxy resin composition was prepared by mixing the components at the mass ratios shown in Table 4. The viscosity at 25°C was 4.4 Pa-s, which was poor. The volatilization amount during thickening was 5 mass% or less. The volatilization amount during curing was 5 mass% or less. The volatilization amount of the cured material was 87 $\mu$g/g, which was favorable, and the bending strain of the cured material 30 days after curing was 2.8%, which was poor.

(Production of continuous carbon fiber strand)

A bundle assembly of discontinuous reinforcing fibers having isotropic fiber orientation was obtained in the same manner as in Example 1.

(Production of molding material)

The epoxy resin composition was applied onto a release film (crocodile mark polysheet, transparent #150, (manufactured by Nichidai Industry Co., Ltd.)) so as to have the content and the areal weight of the reinforcing fibers described in Table 4, the bundle assembly of discontinuous reinforcing fibers was sandwiched therebetween, and the bundle assembly was impregnated with the epoxy resin composition by a roller to produce a molding material.
The tackiness and the flow rate 30 days after the production date were both C, which was poor.

(Production of fiber-reinforced composite material)

A flat fiber-reinforced composite material having a length of 300 mm, a width of 400 mm, and a thickness of 1.6 mm was obtained in the same manner as in Example 1 except that the above molding material was used.
The surface smoothness of the obtained fiber-reinforced composite material after high temperature treatment was C.

[Table 4-1]

| | | | | Comparative Example 1 | Comparative Example 2 | Comparative Example 3 | Comparative Example 4 |
|---|---|---|---|---|---|---|---|
| Epoxy resin composition | Component (A) | | YDF170 | 100 | 20 | 100 | 100 |
| | | | jER806 | - | - | - | - |
| | | | JER825 | - | - | - | - |
| | Component (B) | | DICY7 | 10 | 10 | 14 | 14 |
| | | | 2MZA-PW | - | - | - | - |
| | Component (C) | Acid anhydride | HN-2200 | 20 | 20 | 20 | 20 |
| | | Isocyanate | M20S | - | - | - | - |
| | | | MM-103 | - | - | - | - |
| | | | "Desmodur" I | - | - | - | - |
| | Component (D) | | YD128 | - | 80 | - | - |
| | | | jER1001 | - | - | - | - |
| | Component (E) | | Stearic acid | - | - | - | - |
| | | | 4-Methyl-1,2,3,6-tetrahydrophthalic acid | - | - | - | - |
| | Component (F) | | TETRAD-X | - | - | - | - |
| | | | MY0500 | - | - | - | - |
| | Other components | | QSR-10 | - | - | - | - |
| Content of reinforcing fibers [%] | | | | 50 | 50 | 95 | 20 |
| Bulkiness Bm of bundle assembly of discontinuous reinforcing fibers | | | | 3.0 | 3.0 | 3.0 | 3.0 |
| Content of component (A) in epoxy resin composition [%] | | | | 77 | 15 | 75 | 75 |
| Content of component (B) in epoxy resin composition [%] | | | | 8 | 8 | 10 | 10 |
| Wc/Wb | | | | 0.25 | 0.25 | 0.18 | 0.18 |
| (Me/Mc) × 100 | | | | - | - | - | - |

(continued)

| | | Comparative Example 1 | Comparative Example 2 | Comparative Example 3 | Comparative Example 4 |
|---|---|---|---|---|---|
| Areal weight of molding material for fiber-reinforced composite material [g/m$^2$] | | 2000 | 2000 | 2000 | 2000 |
| Volatilization amount of resin composition during thickening [mass%] | | 0.52 | 0.73 | 0.52 | 0.52 |
| Volatilization amount of resin composition during curing [mass%] | | 0.32 | 0.23 | 0.21 | 0.21 |
| Volatilization amount of cured material of resin composition [pg/g] | | 108 | 43 | 86 | 86 |
| Resin properties | Viscosity at 25°C [Pas] | 1.5 | 4.2 | 0.8 | 0.8 |
| | Bending strain of cured material 30 days after curing [%] | 2.7 | 3.8 | 3.9 | 3.9 |
| Properties of molding material for fiber-reinforced composite material | Tackiness 30 days after production date | C | C | C | C |
| | Flowability 30 days after production date | C | C | C | C |
| Properties of fiber-reinforced composite material | Surface smoothness after high temperature treatment | C | C | C | C |

[Table 4-2]

| | | | Comparative Example 5 | Comparative Example 6 | Comparative Example 7 |
|---|---|---|---|---|---|
| Epoxy resin composition | Component (A) | YDF170 | - | 100 | 100 |
| | | jER806 | - | - | - |
| | | JER825 | - | - | - |
| | Component (B) | DICY7 | 14 | 3 | 10 |
| | | 2MZA-PW | - | - | - |
| | Component (C) | Acid anhydride | HN-2200 | - | 98 | 3 |
| | | Isocyanate | M20S | 30 | - | - |
| | | | MM-103 | - | - | - |
| | | | "Desmodur" I | - | - | - |
| | Component (D) | YD128 | 100 | - | - |
| | | jER1001 | - | - | - |
| | Component (E) | Stearic acid | - | - | - |
| | | 4-Methyl-1,2,3,6-tetrahydrophthalic acid | - | - | - |
| | Component (F) | TETRAD-X | - | - | - |
| | | MY0500 | - | - | - |
| | Other components | QSR-10 | - | - | - |
| Content of reinforcing fibers [%] | | | 50 | 50 | 50 |
| Bulkiness Bm of bundle assembly of discontinuous reinforcing fibers | | | 3.0 | 3.0 | 3.0 |
| Content of component (A) in epoxy resin composition [%] | | | 0 | 50 | 88 |
| Content of component (B) in epoxy resin composition [%] | | | 10 | 1 | 9 |
| Wc/Wb | | | 0.33 | 4.13 | 0.04 |
| (Me/Mc) × 100 | | | - | - | - |
| Areal weight of molding material for fiber-reinforced composite material [g/m²] | | | 2000 | 2000 | 2000 |
| Volatilization amount of resin composition during thickening [mass%] | | | 0.33 | 0.83 | 1.32 |
| Volatilization amount of resin composition during curing [mass%] | | | 0.23 | 0.55 | 0.85 |
| Volatilization amount of cured material of resin composition [μg/g] | | | 38 | 130 | 87 |
| Resin properties | Viscosity at 25°C [Pa-s] | | 5.2 | 3.2 | 4.4 |
| | Bending strain of cured material 30 days after curing [%] | | 5.3 | 2.4 | 2.8 |

(continued)

|  |  | Comparative Example 5 | Comparative Example 6 | Comparative Example 7 |
|---|---|---|---|---|
| Properties of molding material for fiber-reinforced composite material | Tackiness 30 days after production date | C | C | C |
|  | Flowability 30 days after production date | C | C | C |
| Properties of fiber-reinforced composite material | Surface smoothness after high temperature treatment | C | C | C |

INDUSTRIAL APPLICABILITY

The molding material of the present invention is superior to a conventional molding material in that a part of components is not volatilized even when stored for a long period of 30 days or longer, and the tackiness properties of the molding material and the flowability during press molding are stable. Further, use of such a molding material makes it is possible to provide a fiber-reinforced composite material excellent in surface smoothness and mechanical properties even when treated at a high temperature. As a result, the molding material of the present invention is suitably used throughout the applications such as sports and industrial applications in addition to aerospace applications and automobile applications.

**Claims**

1. A molding material comprising:

   an epoxy resin composition containing components (A) to (C) below; and
   reinforcing fibers, wherein
   a content of the reinforcing fibers in the molding material is 30 mass% or more and 90 mass% or less,
   a content of the component (A) in the epoxy resin composition is 20 mass% or more and 75 mass% or less, and
   the epoxy resin composition satisfies the following Formula (1):

   component (A): a bisphenol type epoxy resin having a number average molecular weight of 250 or more and 365 or less
   component (B): a latent curing agent
   component (C): an acid anhydride and/or an isocyanate compound

   $$0.14 \leq Wc/Wb \leq 2.00 \quad ... \quad (1)$$

   wherein,
   Wb: number of moles of active hydrogen in the component (B)
   Wc: number of moles of the component (C).

2. The molding material according to claim 1, wherein the epoxy resin composition further contains a bisphenol type epoxy resin having a number average molecular weight of 366 or more and 1,000 or less, as a component (D).

3. The molding material according to claim 1 or 2, wherein the epoxy resin composition further contains a compound containing a carboxy group, as a component (E).

**4.** The molding material according to claim 3, wherein the epoxy resin composition satisfies the following Formula (2) :

$$1 \leq (Me/Mc) \times 100 \leq 90 \quad \cdots \quad (2)$$

wherein,

Me: number of moles of the component (C)
Me: number of moles of carboxy group of the component (E) .

**5.** The molding material according to any one of claims 1 to 4, wherein a volatilization amount when a cured material obtained by heating the epoxy resin composition at 150°C for 30 minutes is heated at 120°C for 5 hours is 1 μg/g or more and 100 μg/g or less.

**6.** The molding material according to any one of claims 1 to 5, wherein a volatilization amount when the epoxy resin composition is heated at 40°C for 24 hours to be thickened and a volatilization amount when the epoxy resin composition is cured at 150°C for 30 minutes are both 0.01 mass% or more and 5.00 mass% or less.

**7.** The molding material according to any one of claims 1 to 6, wherein the epoxy resin composition further contains a glycidylamine type epoxy resin as a component (F) in an amount of 8 mass% or more and 20 mass% or less in all epoxy resin components in the epoxy resin composition.

**8.** The molding material according to any one of claims 1 to 7, wherein a viscosity of the epoxy resin composition at 25°C is 0.1 Pa-s or more and 3.0 Pa-s or less.

**9.** The molding material according to any one of claims 1 to 8, wherein the molding material has a sheet shape, and an areal weight of the molding material is 500 g/m$^2$ or more and 2,500 g/m$^2$ or less.

**10.** The molding material according to any one of claims 1 to 9, wherein a content of the component (B) in the epoxy resin composition is 1 mass% or more and 15 mass% or less.

**11.** The molding material according to any one of claims 1 to 10, wherein the component (B) is dicyandiamide and/or a derivative of dicyandiamide.

**12.** The molding material according to any one of claims 1 to 11, wherein

the reinforcing fibers are discontinuous reinforcing fibers having a number average fiber length of 3 mm or more and 100 mm or less,
the discontinuous reinforcing fibers are substantially randomly oriented as a bundle assembly in the molding material, and
a bulkiness Bm of the bundle assembly of the discontinuous reinforcing fibers, defined by the following Formula (3), is 1.5 cm$^3$/g or more and 5 cm$^3$/g or less:

$$Bm = Tm/Fm \quad \cdots \quad (3)$$

wherein,
Tm: thickness of the bundle assembly of the discontinuous reinforcing fibers (cm)
Fm: mass of reinforcing fibers per unit area in the molding material (g/cm$^2$).

**13.** The molding material according to any one of claims 1 to 12, wherein the reinforcing fibers are carbon fibers.

**14.** A fiber-reinforced composite material produced by curing the molding material according to any one of claims 1 to 13.

## INTERNATIONAL SEARCH REPORT

| International application No. |
| --- |
| **PCT/JP2021/031686** |

**A.    CLASSIFICATION OF SUBJECT MATTER**

*C08J 5/24*(2006.01)i; *C08G 18/58*(2006.01)i; *C08G 59/24*(2006.01)i; *C08G 59/42*(2006.01)i
FI:    C08J5/24 CFC; C08G59/24; C08G59/42; C08G18/58

According to International Patent Classification (IPC) or to both national classification and IPC

**B.    FIELDS SEARCHED**

Minimum documentation searched (classification system followed by classification symbols)

C08J5/24; C08G18/58; C08G59/24; C08G59/42

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2010-234658 A (JX NIPPON OIL & ENERGY CORP.) 21 October 2010 (2010-10-21) entire text, particularly, claims, paragraphs [0058]-[0066], fig. 2-4 | 1-14 |
| A | JP 2011-089071 A (TORAY INDUSTRIES, INC.) 06 May 2011 (2011-05-06) whole document | 1-14 |
| A | WO 2020/054340 A1 (TORAY INDUSTRIES, INC.) 19 March 2020 (2020-03-19) whole document | 1-14 |
| A | JP 2019-116543 A (TORAY INDUSTRIES, INC.) 18 July 2019 (2019-07-18) whole document | 1-14 |
| A | WO 2018/216643 A1 (TORAY INDUSTRIES, INC.) 29 November 2018 (2018-11-29) whole document | 1-14 |

☐ Further documents are listed in the continuation of Box C.          ☑ See patent family annex.

| | |
| --- | --- |
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
| --- | --- |
| **13 October 2021** | **26 October 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2021/031686**

| Patent document cited in search report | | | Publication date (day/month/year) | Patent family member(s) | | | Publication date (day/month/year) |
|---|---|---|---|---|---|---|---|
| JP | 2010-234658 | A | 21 October 2010 | (Family: none) | | | |
| JP | 2011-089071 | A | 06 May 2011 | (Family: none) | | | |
| WO | 2020/054340 | A1 | 19 March 2020 | EP whole document | 3825340 | A1 | |
| JP | 2019-116543 | A | 18 July 2019 | (Family: none) | | | |
| WO | 2018/216643 | A1 | 29 November 2018 | US whole document | 2020/0157292 | A1 | |
| | | | | EP | 3632952 | A1 | |
| | | | | CN | 110637041 | A | |
| | | | | KR | 10-2020-0010258 | A | |

Form PCT/ISA/210 (patent family annex) (January 2015)

**REFERENCES CITED IN THE DESCRIPTION**

**Patent documents cited in the description**

- WO 2020050200 A
- WO 2018190329 A
- WO 2018216643 A